# EUROPEAN PATENT APPLICATION

(11) **EP 4 492 212 A1**
(43) Date of publication of application: **15.01.2025**
(21) Application number: 23807042.9
(22) Date of filing: 18.05.2023
(51) Int. Cl.: G06F 3/0481

(54) **METHOD FOR COPYING DATA, AND ELECTRONIC DEVICE**

(30) Priority: 20.05.2022 CN 202210552437
(71) Applicant: Huawei Technologies Co., Ltd., Shenzhen, Guangdong 518129 (CN)
(72) Inventor: YANG, Yunfan, Shenzhen, Guangdong 518129 (CN); BIAN, Chao, Shenzhen, Guangdong 518129 (CN); XU, Jing, Shenzhen, Guangdong 518129 (CN); JIN, Mingru, Shenzhen, Guangdong 518129 (CN)
(74) Representative: MERH-IP Matias Erny Reichl Hoffmann Patentanwälte PartG mbB
(86) International application number: PCT/CN2023/095093
(87) International publication number: WO 2023/222092

(57) **Abstract**

This application provides a data copying method and an electronic device, and relates to the field of electronic technologies. According to the data copying method provided in this application, first, after performing a plurality of copy, cut, or drag operations in one or more source applications, a user may copy one or more pieces of data to a target application by performing one paste or drag operation. Then, a visualized interface may be provided for the copied, cut, or dragged data, and different types of data are displayed in different formats on the interface. Further, on the visualized interface, the user may adjust an arrangement order of different data, and may further delete any data. This greatly improves user experience.

## Description

This application claims priority to Chinese Patent Application No. 202210552437.0, filed with the China National Intellectual Property Administration on May 20, 2022 and entitled "DATA COPYING METHOD AND ELECTRONIC DEVICE", which is incorporated herein by reference in its entirety.

### TECHNICAL FIELD

This application relates to the field of electronic technologies, and in particular, to a data copying method and an electronic device.

### BACKGROUND

In daily life, in a process of using an electronic device like a mobile phone or a tablet, a consumer usually needs to copy a plurality of segments of inconsecutive data from one or more source applications, and paste the plurality of segments of inconsecutive data into a target application. For example, the source application may be a news application, and the target application may be a notepad application, a document application, or the like. In this process, the user needs to frequently switch between applications, and needs to paste data once after copying the data once. In this case, operations are complex.

A feasible solution is to grant an input method application a permission to access a clipboard, and the input method application stores, into process space of the input method application, data copied or cut each time. In this way, the user can perform copying once after performing copying or cutting a plurality of times.

However, when copying data, the user needs to invoke the input method application, tap a historical clipboard in settings, and then select the data for pasting. In this case, operations are still complex and are limited by an interface size of the input method application and a data processing manner. Consequently, a visualization degree is not high, and user experience is unfavorable.

### SUMMARY

Embodiments of this application provide a data copying method and an electronic device. According to the data copying method provided in this application, first, after performing a plurality of copy, cut, or drag operations in one or more source applications, a user may copy one or more pieces of data to a target application by performing one paste or drag operation. Then, a visualized interface may be provided for the copied, cut, or dragged data, and different types of data are displayed in different formats on the interface. Further, on the visualized interface, the user may adjust an arrangement order of different data, and may further delete any data. This greatly improves user experience.

According to a first aspect, this application provides a data copying method, applied to an electronic device. The method includes: The electronic device determines, in response to receiving a first operation performed by a user, first selected data by using a first source application, and sends the first selected data to a first process, where the first operation is copying, cutting, or dragging, and the first selected data includes at least one of a picture, a text paragraph, and a file; the electronic device converts the first selected data into a first extended data object by using the first process, where the first extended data object includes the first selected data and a first status parameter, and the first status parameter is used to describe at least a format of data in the first selected data; and the electronic device displays a first window in response to receiving a second operation performed by the user, where the first window is used to display data including the first selected data, and data in different formats is displayed in different manners.

In the foregoing embodiments, after determining the selected data, in a process of converting the selected data into the extended data object, the electronic device analyzes the format of the data in the selected data, and then displays the data in different formats in the first window in the different display manners. It is clearly that, according to the data copying method provided in this application, a visualized interface is provided for the user, so that the user knows specific data that is previously copied, cut, or dragged by the user, and a robust implementation basis and an interface basis are provided for the user to delete data and adjust an arrangement order of the data.

With reference to some embodiments of the first aspect, in some embodiments, the method further includes: The electronic device determines, by using the first process and based on the status parameter, manners of displaying the data in different formats in the first window.

In the foregoing embodiments, the electronic device may determine data formats of different data based on the status parameter, to determine the manners of displaying the data in the different data formats.

With reference to some embodiments of the first aspect, in some embodiments, that the electronic device determines, by using the first process and based on the status parameter, manners of displaying the data in different formats in the first window specifically includes: When the first selected data includes a plurality of pieces of data, and there are a plurality of controls corresponding to the plurality of pieces of data in the first window, the first process determines an internal arrangement order of the plurality of controls based on the status parameter.

In the foregoing embodiments, the electronic device further adjusts the order of the data in the first window based on the data format of the data, so that the data in the first window is arranged in order. In this way, after copying the plurality of pieces of data, the user can easily find specific data in the first window.

With reference to some embodiments of the first aspect, in some embodiments, the arrangement order is a text, a picture, and a file.

In the foregoing embodiments, the arrangement order of the data in the first window may be the text, the picture, and the file, or may be another order. This helps the user search for specific data.

With reference to some embodiments of the first aspect, in some embodiments, the status parameter includes a format parameter, and the format parameter is used to identify the format of the data; and the status parameter further includes at least one of a size parameter and a copy parameter, the size parameter is used to identify a size of the data, and the copy parameter is used to identify whether the data is copied to memory space of the first process.

In the foregoing embodiments, the status parameter includes a plurality of parameters such as the format parameter, the size parameter, and the copy parameter, which respectively correspond to whether the electronic device can perform a further operation in different cases. For example, the status parameter is used to determine the manners of displaying the data in different formats, the copy parameter is used to indicate whether the file on the electronic device supports dragging and pasting to another application that is not a source application, and the size parameter may be used to display data of a file type, and the like.

With reference to some embodiments of the first aspect, in some embodiments, after that the electronic device displays a first window in response to receiving a second operation performed by the user, the method further includes: when content displayed in the first window includes a first control, the first control corresponds to first data, and the first data belongs to the first selected data, in response to receiving a third operation performed by the user on the first control, the electronic device skips displaying the first control in the first window, and deletes the first data by using the first process.

In the foregoing embodiments, the first window supports the user in deleting data in the first window by performing some operations. When unnecessary data is copied, cut, or dragged due to a misoperation performed by the user, the user does not need to copy, cut, or drag the data again, and the user only needs to delete the unnecessary data in the first window. This greatly simplifies user operations and improves user experience.

With reference to some embodiments of the first aspect, in some embodiments, after that the electronic device displays a first window in response to receiving a second operation performed by the user, the method further includes: When content displayed in the first window includes a first control and a second control, the first control corresponds to first data, and the first control is displayed at a first location of the first window, the electronic device displays the second control at a second location of the first window in response to receiving a fourth operation performed by the user on the first control, where the first location is different from the second location.

In the foregoing embodiments, the first window supports the user in adjusting an arrangement manner of different data in the first window by performing some operations, so that the user can simply process the data before pasting or dragging the data to a target application. This greatly simplifies user operations and improves user experience.

With reference to some embodiments of the first aspect, in some embodiments, after that the electronic device displays a first window in response to receiving a second operation performed by the user, the method further includes: When content displayed in the first window includes a plurality of controls, each of the plurality of controls corresponds to one piece of data in the first selected data, and the controls correspond to different data, in response to receiving a fifth operation performed by the user on the plurality of controls, the electronic device sends, by using the first process, data corresponding to the plurality of controls to a target application, where the fifth operation is a drag operation; or in response to receiving a sixth operation performed by the user on the plurality of controls and a seventh operation performed by the user on an interface of a target application, the electronic device sends, by using the first process, data corresponding to the plurality of controls to the target application, where the sixth operation is an operation used to select the plurality of controls, and the seventh operation is a paste operation.

In the foregoing embodiments, the user may select a plurality of pieces of data in the first window, and copy the selected plurality of pieces of data to the target application by performing the paste or drag operation.

With reference to some embodiments of the first aspect, in some embodiments, that the electronic device sends, by using the first process, data corresponding to the plurality of controls to a target application specifically includes: The electronic device determines, by using the first process and based on the plurality of controls, the data corresponding to the plurality of controls; the electronic device generates, by using the first process, a first copied data ClipData object based on the first extended data object and the data corresponding to the plurality of controls; and the electronic device sends the first copied data ClipData object to the target application by using the first process.

In the foregoing embodiments, the application does not need to perform active adaptation, the first process still sends the copied data ClipData object to the application, and the application may correctly parse the copied data ClipData object.

With reference to some embodiments of the first aspect, in some embodiments, the method further includes: The electronic device stores the first extended data object in a non-volatile storage medium by using the first process.

In the foregoing embodiments, the first process may store copied, cut, and dragged data in the non-volatile storage medium. After the first process is restarted after being destroyed, the data may still be restored. This facilitates user operations.

With reference to some embodiments of the first aspect, in some embodiments, that the first process stores the first extended data object in a non-volatile storage medium specifically includes: The electronic device serializes the first extended data object by using the first process, to obtain a first serialized object; the electronic device converts the first serialized object into a first byte array by using the first process; the electronic device converts the first byte array into a first character string by using the first process; and the electronic device writes the first character string into the non-volatile storage medium by using the first process.

In the foregoing embodiments, the first process performs serialization, byteization, and character stringization on the extended data object to obtain the character string corresponding to the extended data object, and then writes the character string into the non-volatile storage medium. Compared with other storage manners, the data storage method is a more lightweight storage manner. In this way, fewer system resources are consumed, and a relative order of fields in the first extended data object is unchanged.

With reference to some embodiments of the first aspect, in some embodiments, after that the electronic device converts the first selected data into a first extended data object by using the first process, the method further includes: In response to receiving an eighth operation performed by the user, the electronic device determines second selected data by using a second source application, and sends the second selected data to the first process, where the eighth operation is copying, cutting, or dragging, and the second selected data includes at least one of a picture, a text paragraph, and a file; and the electronic device converts the second selected data and the first extended object into a third extended data object by using the first process; or the electronic device converts the second selected data into a second extended data object by using the first process.

In the foregoing embodiments, after the user copies, drags, or cuts data to the first process a plurality of times, the first process may merge the plurality of pieces of data into one extended data object, or may store a plurality of extended data objects.

With reference to some embodiments of the first aspect, in some embodiments, when the first window includes a plurality of controls, and data corresponding to the plurality of controls belongs to the first selected data and the second selected data, in response to receiving a ninth operation performed by the user on the plurality of controls, the electronic device sends, by using the first process, the data corresponding to the plurality of controls to a target application, where the fifth operation is a drag operation; or in response to receiving a tenth operation performed by the user on the plurality of controls and an eleventh operation performed by the user on an interface of a target application, the electronic device sends, by using the first process, the data corresponding to the plurality of controls to the target application, where the tenth operation is an operation used to select the plurality of controls, and the eleventh operation is a paste operation.

In the foregoing embodiments, the user may select a plurality of pieces of data in the first window, and copy the plurality of pieces of data to the target application. This avoids a plurality of complex operations performed by the user, and improves user experience. In addition, the user may select, in the first window, data that needs to be copied, without worrying about copying, cutting, or dragging redundant data.

With reference to some embodiments of the first aspect, in some embodiments, before that the electronic device determines, in response to receiving a first operation performed by a user, first selected data by using a first source application, and sends the first selected data to a first process, the method further includes: The electronic device determines, in response to receiving a twelfth operation performed by the user, third selected data by using a third source application, and sends the third selected data to the first process, where the twelfth operation is copying, cutting, or dragging; and after that the electronic device displays a first window, the method further includes: The electronic device displays a third control in the first window in response to receiving the twelfth operation performed by the user in the first window, where data corresponding to the third control belongs to the third selected data.

In the foregoing embodiments, the data that is previously copied, cut, or dragged by the user to the first process does not appear in the first window at the beginning, and historical data is displayed in the first window only after the twelfth operation performed by the user is received, where the historical data includes the third selected data.

With reference to some embodiments of the first aspect, in some embodiments, a time interval between occurrence time of the second operation and occurrence time of the twelfth operation is greater than a time threshold.

In the foregoing embodiments, when a time interval between time of previous copying, cutting, or dragging and time of currently displaying the first window by the electronic device is greater than the time threshold, previously copied, cut, or dragged data is not displayed in the first window.

With reference to some embodiments of the first aspect, in some embodiments, after that the electronic device determines, in response to receiving a twelfth operation performed by the user, third selected data by using a third source application, and sends the third selected data to the first process, and before that the electronic device determines, in response to receiving a first operation performed by a user, first selected data by using a first source application, and sends the first selected data to a first process, the method further includes: The electronic device disables displaying of the first window.

In the foregoing embodiments, content displayed in the first window is data selected by the user by performing a copy, cut, or drag operation after the first window is closed and before the first window is displayed again.

With reference to some embodiments of the first aspect, in some embodiments, after that the electronic device displays a first window, the method further includes: When the first window includes a first control, a second control, and a third control, the first control corresponds to first data, the second control corresponds to second data, and the third control is configured to share data with a peer electronic device, in response to receiving a selection operation performed by the user on the first control and the second control and an operation performed by the user on the third control, the electronic device sends the first data and the second data to the peer electronic device by using the first process.

In the foregoing embodiments, the electronic device may further send the data to another electronic device, so that the data copied by the user on a local electronic device can be used on the another electronic device. This greatly improves user experience.

With reference to some embodiments of the first aspect, in some embodiments, that the electronic device sends the first data and the second data to the peer electronic device by using the first process specifically includes: The electronic device sends a second copied data ClipData object to the peer electronic device, where data corresponding to the second copied data ClipData object includes the first data and the second data; or the electronic device sends a second extended data object to the peer electronic device, where data of the second extended data object includes the first data and the second data.

In the foregoing embodiments, the electronic device may send the copied data ClipData object to another electronic device, or may send extended data to another electronic device.

With reference to some embodiments of the first aspect, in some embodiments, after that the electronic device converts the first selected data into a first extended data object by using the first process, the method further includes: The electronic device sends first to-be-sent data to a peer electronic device by using the first process, where the first to-be-sent data is the first extended data object, or the first to-be-sent data is a copied data ClipData object corresponding to the first selected data.

In the foregoing embodiments, the electronic device may automatically synchronize, to another electronic device, data copied, cut, or dragged by the user, and the user does not need to manually share the data with the another electronic device. This simplifies user operations and improves user experience.

According to a second aspect, this application provides a data copying method, applied to a system including a first electronic device and a second electronic device. A communication connection is established between the first electronic device and the second electronic device. The method includes: The first electronic device determines, in response to receiving a first operation performed by a user, first selected data by using a first source application, and sends the first selected data to a first process, where the first operation is copying, cutting, or dragging, the first selected data includes at least one of a picture, a text paragraph, and a file, and the first source application and the first process are on the first electronic device; and the first electronic device sends the first selected data to the second electronic device by using the first process; and the second electronic device displays a second window in response to receiving a second operation performed by the user, where the second window includes a plurality of controls, the plurality of controls correspond to a plurality of pieces of data in the first selected data, and the plurality of controls correspond to different data.

In the foregoing embodiments, a local electronic device sends, to a peer electronic device, data copied, cut, or dragged by the user, and the user may view the corresponding data in the second window on the peer electronic device. This improves user experience.

With reference to some embodiments of the second aspect, in some embodiments, that the first electronic device determines first selected data by using a first source application, and sends the first selected data to a first process specifically includes: The first electronic device determines the first selected data by using the first source application, and sends, to the first process, a first copied data ClipData object corresponding to the first selected data.

With reference to some embodiments of the second aspect, in some embodiments, the method further includes: The first electronic device converts the first copied data ClipData object into a first extended data object by using the first process, where the first extended data object includes the first selected data and a first status parameter, and the first status parameter is used to describe at least a format of data in the first selected data.

With reference to some embodiments of the second aspect, in some embodiments, that the first process sends the first selected data to the second electronic device specifically includes: The first electronic device sends the first extended data object to a second process by using the first process and based on the communication connection, where the second process is a process on the second electronic device; or the first electronic device sends the first copied data ClipData object to a target application by using the first process and based on the communication connection, where the target application is an application on the second electronic device.

With reference to some embodiments of the second aspect, in some embodiments, in response to receiving a third operation performed by the user on the plurality of controls, the second electronic device sends, by using a second process, the data corresponding to the plurality of controls to a target application, where the fifth operation is a drag operation; or in response to a fourth operation performed by the user on the plurality of controls and a fifth operation performed by the user on an interface of a target application, the second electronic device sends, by using a second process, the data corresponding to the plurality of controls to the target application, where the fourth operation is an operation used to select the plurality of controls, and the fifth operation is a paste operation.

According to a third aspect, an embodiment of this application provides an electronic device. The electronic device includes one or more processors and a memory. The memory is coupled to the one or more processors, the memory is configured to store computer program code, and the computer program code includes computer instructions. The one or more processors invoke the computer instructions, so that the electronic device performs the following operations: The electronic device determines, in response to receiving a first operation performed by a user, first selected data by using a first source application, and sends the first selected data to a first process, where the first operation is copying, cutting, or dragging, and the first selected data includes at least one of a picture, a text paragraph, and a file; the electronic device converts the first selected data into a first extended data object by using the first process, where the first extended data object includes the first selected data and a first status parameter, and the first status parameter is used to describe at least a format of data in the first selected data; and the electronic device displays a first window in response to receiving a second operation performed by the user, where the first window is used to display data including the first selected data, and data in different formats is displayed in different manners.

In the foregoing embodiments, after determining the selected data, in a process of converting the selected data into the extended data object, the electronic device analyzes the format of the data in the selected data, and then displays the data in different formats in the first window in the different display manners. It is clearly that, according to the data copying method provided in this application, a visualized interface is provided for the user, so that the user knows specific data that is previously copied, cut, or dragged by the user, and a robust implementation basis and an interface basis are provided for the user to delete data and adjust an arrangement order of the data.

With reference to some embodiments of the third aspect, in some embodiments, the one or more processors are further configured to invoke the computer instructions, so that the electronic device performs the following operation: The electronic device determines, by using the first process and based on the status parameter, manners of displaying the data in different formats in the first window.

With reference to some embodiments of the third aspect, in some embodiments, the one or more processors are specifically configured to invoke the computer instructions, so that the electronic device performs the following operation: When the first selected data includes a plurality of pieces of data, and a plurality of controls corresponding to the plurality of pieces of data exist in the first window, the first process determines an internal arrangement order of the plurality of controls based on the status parameter.

With reference to some embodiments of the third aspect, in some embodiments, the arrangement order is a text, a picture, and a file.

With reference to some embodiments of the third aspect, in some embodiments, the status parameter includes a format parameter, and the format parameter is used to identify the format of the data; and the status parameter further includes at least one of a size parameter and a copy parameter, the size parameter is used to identify a size of the data, and the copy parameter is used to identify whether the data is copied to memory space of the first process.

With reference to some embodiments of the third aspect, in some embodiments, the one or more processors are further configured to invoke the computer instructions, so that the electronic device performs the following operations: When content displayed in the first window includes a first control, the first control corresponds to first data, and the first data belongs to the first selected data, in response to receiving a third operation performed by the user on the first control, the electronic device skips displaying the first control in the first window, and deletes the first data by using the first process.

With reference to some embodiments of the third aspect, in some embodiments, the one or more processors are further configured to invoke the computer instructions, so that the electronic device performs the following operation: When content displayed in the first window includes a first control and a second control, data corresponding to the first control belongs to the first selected data, and the first control is displayed at a first location of the first window, the electronic device displays the second control at a second location of the first window in response to receiving a fourth operation performed by the user on the first control, where the first location is different from the second location.

With reference to some embodiments of the third aspect, in some embodiments, the one or more processors are further configured to invoke the computer instructions, so that the electronic device performs the following operations: When content displayed in the first window includes a plurality of controls, each of the plurality of controls corresponds to one piece of data in the first selected data, and the controls correspond to different data, in response to receiving a fifth operation performed by the user on the plurality of controls, the electronic device sends, by using the first process, data corresponding to the plurality of controls to a target application, where the fifth operation is a drag operation; or in response to receiving a sixth operation performed by the user on the plurality of controls and a seventh operation performed by the user on an interface of a target application, the electronic device sends, by using the first process, data corresponding to the plurality of controls to the target application, where the sixth operation is an operation used to select the plurality of controls, and the seventh operation is a paste operation.

With reference to some embodiments of the third aspect, in some embodiments, the one or more processors are specifically configured to invoke the computer instructions, so that the electronic device performs the following operations: The electronic device determines, by using the first process and based on the plurality of controls, the data corresponding to the plurality of controls; the electronic device generates, by using the first process, a first copied data ClipData object based on the first extended data object and the data corresponding to the plurality of controls; and the electronic device sends the first copied data ClipData object to the target application by using the first process.

With reference to some embodiments of the third aspect, in some embodiments, the one or more processors are further configured to invoke the computer instructions, so that the electronic device performs the following operation: The electronic device stores the first extended data object into a non-volatile storage medium by using the first process.

With reference to some embodiments of the third aspect, in some embodiments, the one or more processors are specifically configured to invoke the computer instructions, so that the electronic device performs the following operations: The electronic device serializes the first extended data object by using the first process, to obtain a first serialized object; the electronic device converts the first serialized object into a first byte array by using the first process; the electronic device converts the first byte array into a first character string by using the first process; and the electronic device writes the first character string into the non-volatile storage medium by using the first process.

With reference to some embodiments of the third aspect, in some embodiments, the one or more processors are further configured to invoke the computer instructions, so that the electronic device performs the following operations: In response to receiving an eighth operation performed by the user, the electronic device determines second selected data by using a second source application, and sends the second selected data to the first process, where the eighth operation is copying, cutting, or dragging, and the second selected data includes at least one of a picture, a text paragraph, and a file; and the electronic device converts the second selected data and the first extended object into a third extended data object by using the first process; or the electronic device converts the second selected data into a second extended data object by using the first process.

With reference to some embodiments of the third aspect, in some embodiments, the one or more processors are further configured to invoke the computer instructions, so that the electronic device performs the following operations: When the first window includes a plurality of controls, and data corresponding to the plurality of controls belongs to the first selected data and the second selected data, in response to receiving a ninth operation performed by the user on the plurality of controls, the electronic device sends, by using the first process, the data corresponding to the plurality of controls to a target application, where the fifth operation is a drag operation; or in response to receiving a tenth operation performed by the user on the plurality of controls and an eleventh operation performed by the user on an interface of a target application, the electronic device sends, by using the first process, the data corresponding to the plurality of controls to the target application, where the tenth operation is an operation used to select the plurality of controls, and the eleventh operation is a paste operation.

With reference to some embodiments of the third aspect, in some embodiments, the one or more processors are further configured to invoke the computer instructions, so that the electronic device performs the following operations: When the first window includes a plurality of controls, and data corresponding to the plurality of controls belongs to the first selected data and the second selected data, in response to receiving a ninth operation performed by the user on the plurality of controls, the electronic device sends, by using the first process, the data corresponding to the plurality of controls to a target application, where the fifth operation is a drag operation; or in response to receiving a tenth operation performed by the user on the plurality of controls and an eleventh operation performed by the user on an interface of a target application, the electronic device sends, by using the first process, the data corresponding to the plurality of controls to the target application, where the tenth operation is an operation used to select the plurality of controls, and the eleventh operation is a paste operation.

With reference to some embodiments of the third aspect, in some embodiments, the one or more processors are specifically configured to invoke the computer instructions, so that the electronic device performs the following operations: In response to receiving a twelfth operation performed by the user, the electronic device determines third selected data by using a third source application, and sends the third selected data to the first process, where the twelfth operation is copying, cutting, or dragging; and the electronic device displays a third control in the first window in response to receiving a thirteenth operation performed by the user in the first window, where data corresponding to the third control belongs to the third selected data.

With reference to some embodiments of the third aspect, in some embodiments, a time interval between occurrence time of the second operation and occurrence time of the twelfth operation is greater than a time threshold.

With reference to some embodiments of the third aspect, in some embodiments, the one or more processors are further configured to invoke the computer instructions, so that the electronic device performs the following operation: The electronic device disables displaying of the first window.

With reference to some embodiments of the third aspect, in some embodiments, the one or more processors are further configured to invoke the computer instructions, so that the electronic device performs the following operations: When the first window includes a first control, a second control, and a third control, the first control corresponds to first data, the second control corresponds to second data, and the third control is configured to share data with a peer electronic device, in response to receiving a selection operation performed by the user on the first control and the second control and an operation performed by the user on the third control, the electronic device sends the first data and the second data to the peer electronic device by using the first process.

With reference to some embodiments of the third aspect, in some embodiments, the one or more processors are specifically configured to invoke the computer instructions, so that the electronic device performs the following operations: The electronic device sends a second copied data ClipData object to the peer electronic device, where data corresponding to the second copied data ClipData object includes the first data and the second data; or the electronic device sends a second extended data object to the peer electronic device, where data of the second extended data object includes the first data and the second data.

With reference to some embodiments of the third aspect, in some embodiments, the one or more processors are further configured to invoke the computer instructions, so that the electronic device performs the following operation: The electronic device sends first to-be-sent data to a peer electronic device by using the first process, where the first to-be-sent data is the first extended data object, or the first to-be-sent data is a copied data ClipData object corresponding to the first selected data.

According to a fourth aspect, an embodiment of this application provides a chip system. The chip system is used in an electronic device, and the chip system includes one or more processors. The processor is configured to invoke computer instructions, so that the electronic device performs the method described in any one of the first aspect and the possible implementations of the first aspect.

According to a fifth aspect, an embodiment of this application provides a computer program product including instructions. When the computer program product runs on an electronic device, the electronic device is enabled to perform the method described in any one of the first aspect and the possible implementations of the first aspect.

According to a sixth aspect, an embodiment of this application provides a computer-readable storage medium, including instructions. When the instructions are run on an electronic device, the electronic device is enabled to perform the method described in any one of the first aspect and the possible implementations of the first aspect.

It may be understood that the electronic device provided in the third aspect, the chip system provided in the fourth aspect, the computer program product provided in the fifth aspect, and the computer storage medium provided in the sixth aspect are all configured to perform the methods provided in embodiments of this application. Therefore, for beneficial effects that can be achieved by the electronic device, the chip system, the computer program product, and the computer-readable storage medium, refer to the beneficial effects in the corresponding methods. Details are not described herein again.

### BRIEF DESCRIPTION OF DRAWINGS

FIG. 1(A) to FIG. 1(D) and FIG. 2(A) to FIG. 2(D) are an example diagram of copying a plurality of segments of data in one application according to an embodiment of this application;
FIG. 3 is an example diagram of an implementation method corresponding to an operation procedure shown in FIG. 1(A) to FIG. 1 (D) and FIG. 2(A) to FIG. 2(D) according to an embodiment of this application;
FIG. 4 is an example diagram of storing data in a clipboard by a third-party application according to an embodiment of this application;
FIG. 5(A) to FIG. 5(D) are an example diagram of transferring data in a historical clipboard to a target application by a third-party application according to an embodiment of this application;
FIG. 6(A) to FIG. 6(D) and FIG. 7(A) to FIG. 7(C) each are an example diagram of a scenario of a copying method according to an embodiment of this application;
FIG. 8(A) to FIG. 8(D) and FIG. 9(A) to FIG. 9(D) each are another example diagram of a scenario of a copying method according to an embodiment of this application;
FIG. 10(A) to FIG. 10(D) are another example diagram of a scenario of a data copying method according to an embodiment of this application;
FIG. 11(A) and FIG. 11(B) are another example diagram of a scenario of a data copying method according to an embodiment of this application;
FIG. 12(A) and FIG. 12(B) are another example diagram of a scenario of a data copying method according to an embodiment of this application;
FIG. 13A(A) to FIG. 13A(C) and FIG. 13B(A) to FIG. 13B(C) each are an example diagram of a scenario of a data copying method according to an embodiment of this application;
FIG. 14 is an example diagram of a method procedure of a data copying method according to an embodiment of this application;
FIG. 15 is an example diagram of converting selected data into an extended data object according to an embodiment of this application;
FIG. 16A and FIG. 16B each are an example diagram of merging extended data according to this application;
FIG. 17 is an example diagram of merging ExtendData objects according to an embodiment of this application;
FIG. 18A is an example diagram of performing persistence processing on data according to an embodiment of this application;
FIG. 18B is an example diagram of performing persistence processing on data according to an embodiment of this application;
FIG. 19 is an example diagram of deleting ExtendItem according to an embodiment of this application;
FIG. 20 is an example diagram of adjusting an arrangement order of Extendltem according to an embodiment of this application;
FIG. 21A and FIG. 21B are an example diagram of generating a ClipData object and sending the ClipData object to a target application according to an embodiment of this application;
FIG. 22 is another example diagram of generating a ClipData object and sending the ClipData object to a target application according to an embodiment of this application;
FIG. 23A and FIG. 23B are an example diagram of a data procedure of a data copying method according to an embodiment of this application;
FIG. 24 is another example diagram of a data procedure of a data copying method according to an embodiment of this application;
FIG. 25 and FIG. 26 each are an example diagram of a data procedure of a data copying method in a cross-device scenario according to an embodiment of this application;
FIG. 27 is an example diagram of a hardware structure of an electronic device according to an embodiment of this application;
FIG. 28 is an example diagram of a software architecture of an electronic device according to an embodiment of this application; and
FIG. 29 is another example diagram of a software architecture of an electronic device according to an embodiment of this application.

### DESCRIPTION OF EMBODIMENTS

Terms used in the following embodiments of this application are merely intended to describe specific embodiments, but are not intended to limit this application. The terms "a", "an", "the", "the foregoing", "the", and "this" of singular forms used in this specification and the appended claims of this application are also intended to include plural forms, unless otherwise specified in the context clearly. It should be further understood that the term "and/or" used in this application indicates and includes any or all possible combinations of one or more of listed items.

The terms "first" and "second" mentioned below are merely intended for a purpose of description, and shall not be understood as an indication or implication of relative importance or implicit indication of a quantity of indicated technical features. Therefore, a feature limited to "first" and "second" may explicitly or implicitly include one or more features. In descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphical manner. The user interface may be a visual interface element, for example, a text, an icon, a button, a menu, a tab, a text box, a dialog box, a status bar, a navigation bar, or a widget that is displayed on a display of the electronic device.

The following shows an example diagram in which a user needs to copy or cut a plurality of segments of inconsecutive content from a source application to a target application. The source application indicates a source application of copied or cut data, and the target application indicates a receiver application of the copied or cut data.

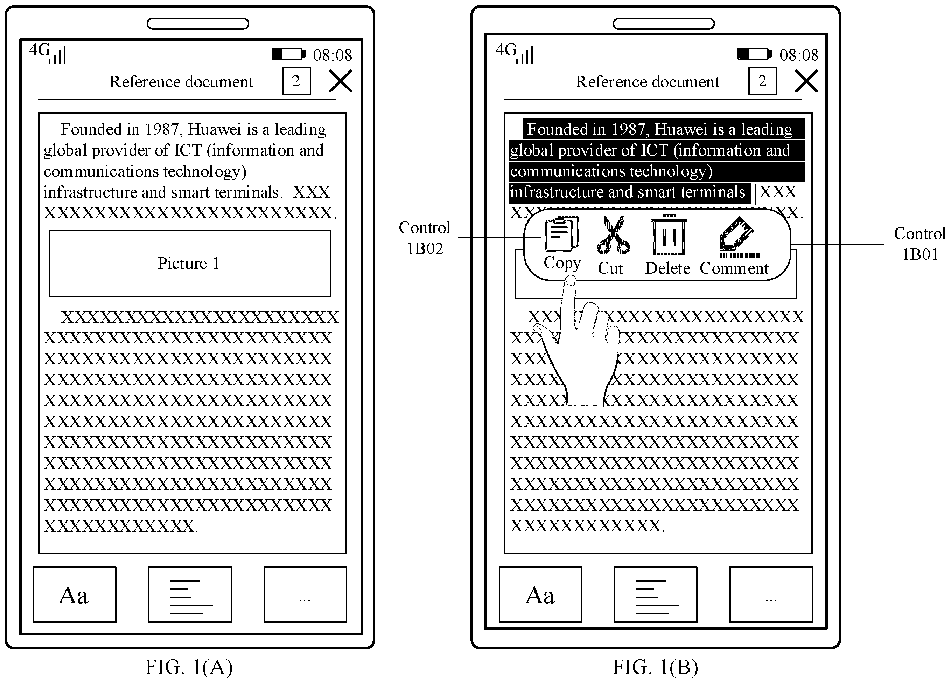

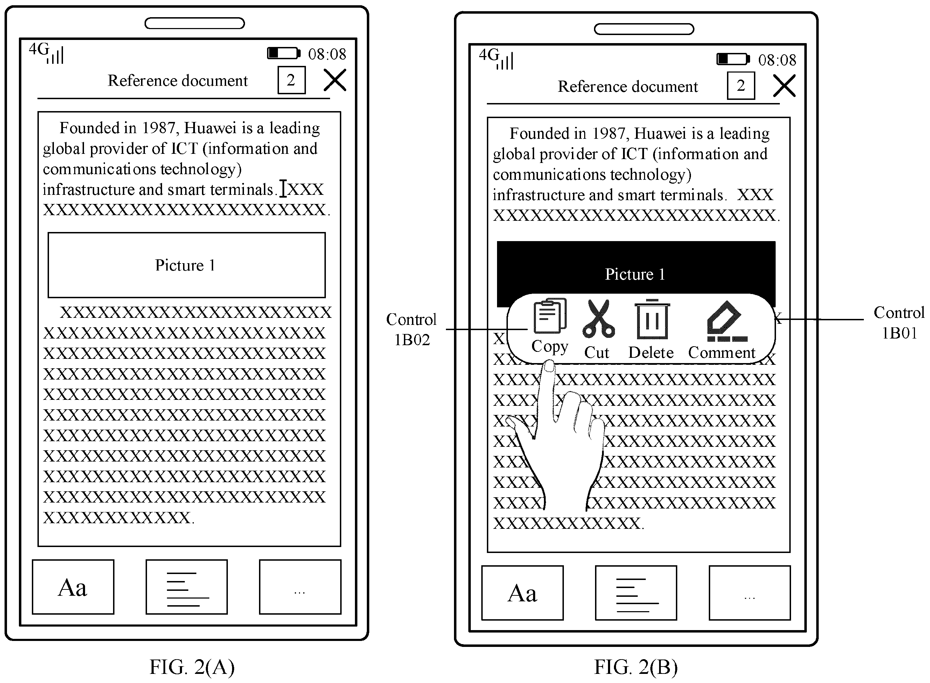

FIG. 1(A) to FIG. 1(D) and FIG. 2(A) to FIG. 2(D) are an example diagram of copying a plurality of segments of data in one application according to an embodiment of this application.

In content shown in FIG. 1(A) to FIG. 1(D) and FIG. 2(A) to FIG. 2(D), a document application is a source application, and a notepad application is a target application. A user needs to perform two copy operations to separately copy two segments of inconsecutive data in the document application to the notepad application. FIG. 1(A) to FIG. 1(D) show a process of a first operation, and FIG. 2(A) to FIG. 2(D) show a process of a second operation.

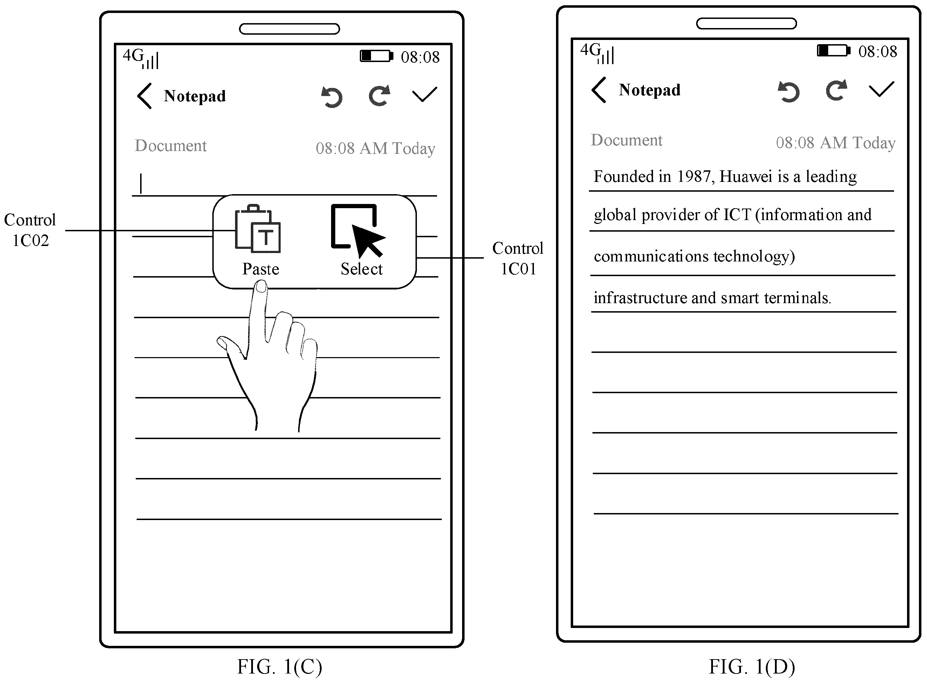

As shown in FIG. 1(A) to FIG. 1(D), first, as shown in FIG. 1(A), the user needs to select a first segment of data, where the first segment of data is a segment of text in FIG. 1(A) to FIG. 1(D). Then, as shown in FIG. 1(B), after a control 1B01 appears, the user taps a control 1B02. Further, as shown in FIG. 1(C), the user switches to the notepad application, and then taps a control 1C02 after a control 1C01 appears in the notepad application, so that the first segment of data is copied to the notepad application. Finally, the copied data appears, as shown in FIG. 1(D).

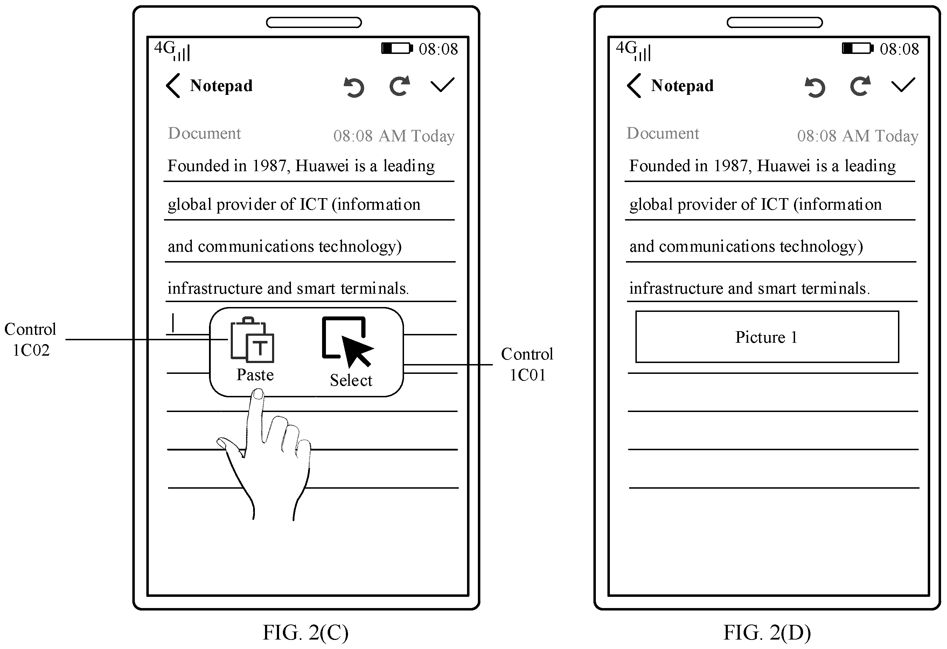

As shown in FIG. 2(A) to FIG. 2(D), first, as shown in FIG. 2(A), the user needs to select a second segment of data, where the second segment of data is a picture in FIG. 1(A) to FIG. 1(D) and FIG. 2(A) to FIG. 2(D). Then, as shown in FIG. 2(B), after the control 1B01 appears, the user taps the control 1B02. Further, as shown in FIG. 2(C), the user switches to the notepad application, and then taps the control 1C02 after the control 1C01 appears in the notepad application, so that the second segment of data is copied to the notepad application. Finally, the copied data appears, as shown in FIG. 2(D).

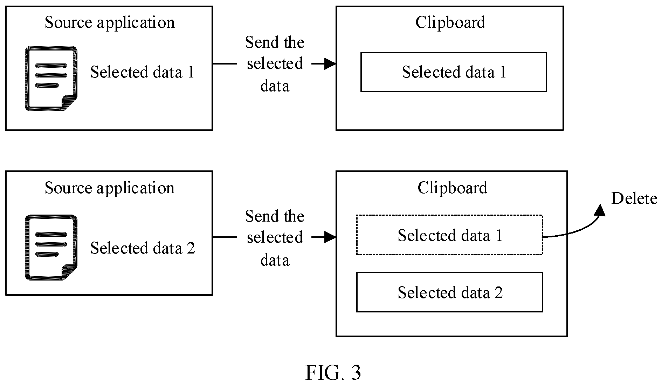

FIG. 3 is an example diagram of an implementation method corresponding to an operation procedure shown in FIG. 1(A) to FIG. 1(D) and FIG. 2(A) to FIG. 2(D) according to an embodiment of this application.

When the user copies or cuts data for the first time, the source application sends the data to a clipboard. When the user copies or cuts data for the second time, the source application sends the data to the clipboard. If there is already data in the clipboard, the data previously stored needs to be deleted before new data is received and stored.

For example, as shown in FIG. 3, when the user copies or cuts data for the first time, the data is selected data 1, and the selected data 1 is sent to the clipboard; when the user copies or cuts data for the second time, the data is selected data 2, and the selected data 2 is sent to the clipboard; and the clipboard deletes the selected data 1 when or before receiving the selected data 2, and then stores the selected data 2.

It is clearly that because the clipboard can store only one piece of data, if a data copying or cutting method shown in FIG. 1(A) to FIG. 1(D) and FIG. 2(A) to FIG. 2(D) is used, the user needs to perform complex operations, resulting in unfavorable user experience. Further, when the user copies data from a plurality of source applications to the target application, the user needs to switch between different source applications, and also needs to perform complex operations, resulting in poor user experience.

To reduce an operation amount of the user in a case of copying a plurality of pieces of inconsecutive data, a feasible solution is to grant a third-party application like an input method application a permission to access the clipboard. To be specific, the third-party application stores data in a historical clipboard, and when there is a user requirement, transfers, to the target application, data that is specified by the user and that is in the historical clipboard.

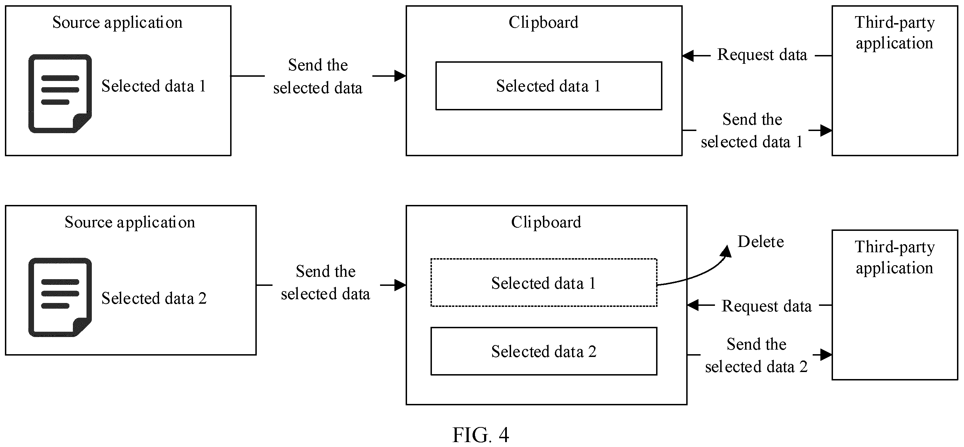

FIG. 4 is an example diagram of storing data in a clipboard by a third-party application according to an embodiment of this application.

As a resident application, the input method application may access, in real time, the clipboard provided by an operating system, and store selected data in the clipboard into memory space of the input method application.

As shown in FIG. 4, after the clipboard obtains the selected data 1 from the source application, the third-party application requests data from the clipboard, and then obtains the selected data 1. After the clipboard obtains the selected data 2 from the source application, the third-party application requests data from the clipboard, and then obtains the selected data 2.

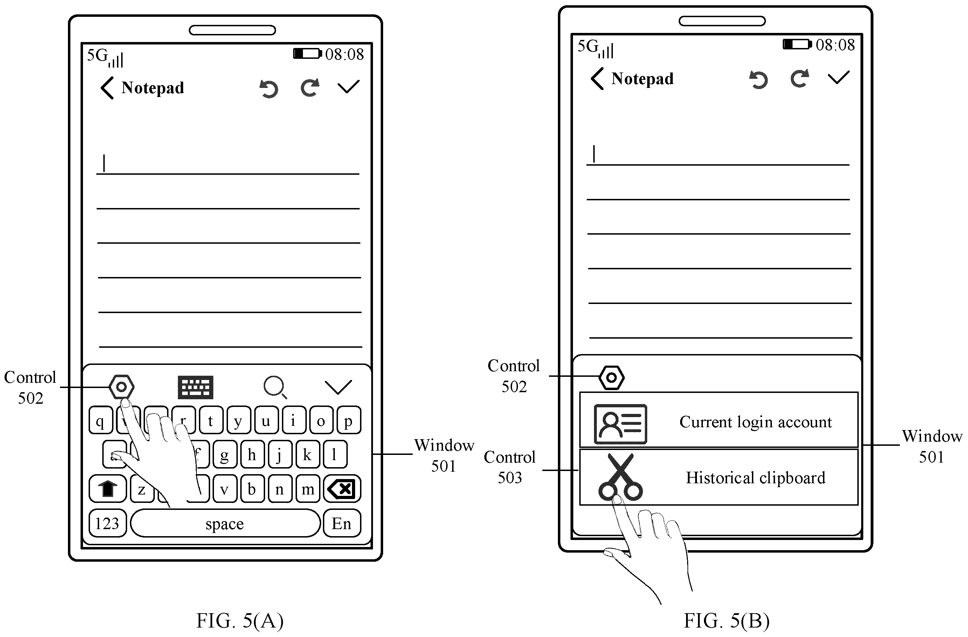

FIG. 5(A) to FIG. 5(D) are an example diagram of transferring data in a historical clipboard to a target application by a third-party application according to an embodiment of this application.

As shown in FIG. 5(A), the user may invoke the input method application in the target application, and an interface of the input method application is, for example, a window 501. The interface of the input method application includes a control 502.

In response to tapping the control 502 by the user, as shown in FIG. 5(B), content displayed on the interface of the input method application includes a control 503. A function corresponding to the control 503 is a historical clipboard.

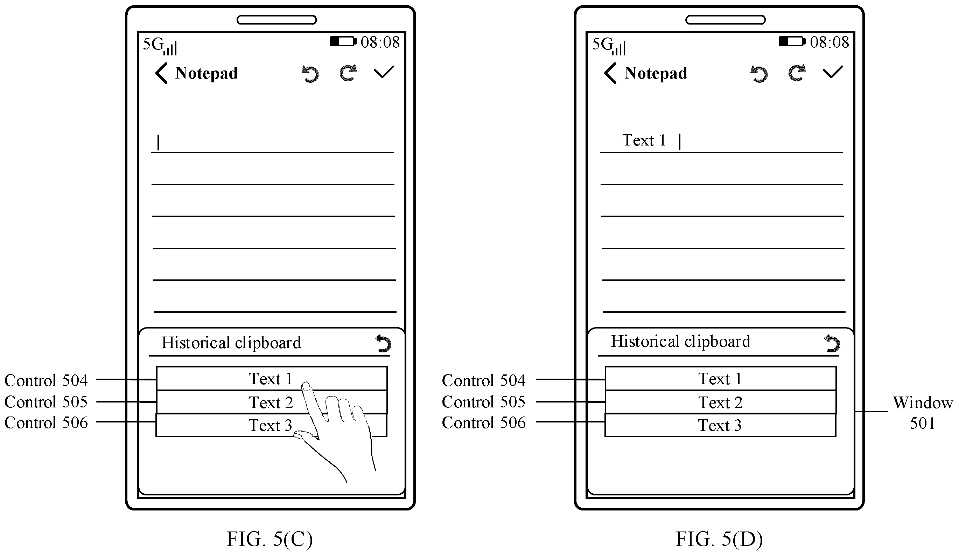

In response to tapping the control 503 by the user, as shown in FIG. 5(C), the user may select different texts on an interface of the historical clipboard, for example, a text 1, a text 2, and a text 3 in the figure. The text 1 corresponds to a control 504, the text 2 corresponds to a control 505, and the text 3 corresponds to a control 506.

In response to tapping the control 504 by the user, as shown in FIG. 5(D), the text 1 is sent to a notepad application.

However, in the manner shown in FIG. 5(A) to FIG. 5(D), first, the third-party application can obtain and store data in the clipboard only after obtaining a permission to access the clipboard. Then, the third-party application does not store multimedia resources such as a picture into the historical clipboard. Further, the third-party application arranges copied data in an order of the copied data. Consequently, it is inconvenient for the user to find required data from a plurality of pieces of data. In addition, the user cannot modify, in the third-party application, the data in the historical clipboard, for example, cannot modify an arrangement order or delete some items.

In conclusion, as shown in FIG. 5(A) to FIG. 5(D), when the third-party application like the input method application stores data in the clipboard, user experience is still poor.

Based on this, embodiments of this application provide a data copying method. According to the data copying method provided in embodiments of this application, first, a user is provided with a plurality of manners of copying data, for example, a drag operation, and an operation of selecting data and then copying or cutting the data. Then, data in a plurality of media formats, such as a text, an image, and a video, may be stored in the clipboard. Further, a visualized and highly operable interface may be provided to display historical data in the clipboard, and the user can edit the historical data on the interface, for example, deletion or order adjustment. In addition, the historical data in the clipboard may be persisted from memory space of a process to a hard disk of an electronic device. Then, the data may be sent to another electronic device by using the clipboard, to implement cross-device sharing.

The following describes, by using examples, several scenarios of a copying method provided in embodiments of this application.

### Scenario 1: Copy data to a transfer station.

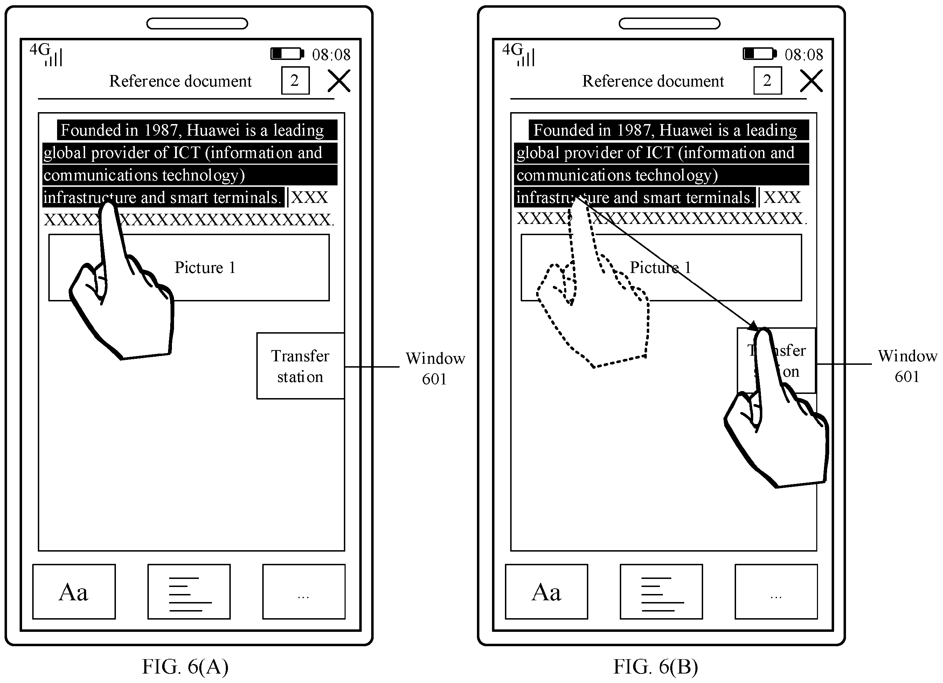

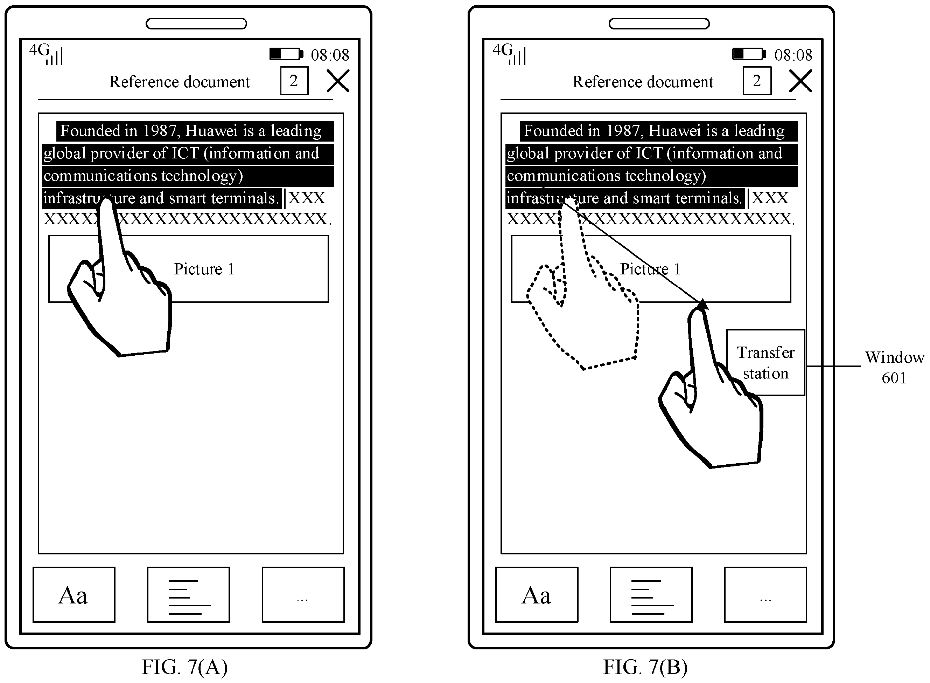

FIG. 6(A) to FIG. 6(D) and FIG. 7(A) to FIG. 7(C) each are an example diagram of a scenario of a copying method according to an embodiment of this application.

To better distinguish between a clipboard provided in this embodiment of this application and the clipboard mentioned above, in the following descriptions, the transfer station indicates a clipboard provided by an operating system. The transfer station is a process maintained by a system, and may run in a form of a service (service) or a system application.

First, as shown in FIG. 6(A), an interface displayed by an electronic device is an interface of a document application, and a user may select a plurality of texts. The plurality of texts may be one or more complete paragraphs, or may be one or more incomplete paragraphs. The plurality of selected texts are selected data 1. The user may perform a preset operation, where the preset operation is used to trigger displaying of a window 601. The preset operation is another predefined operation like touching and holding, double-tapping, drawing a preset pattern, or delivering a voice command. The preset operation is not limited in embodiments of this application. After the interface displayed by the electronic device includes the window 601, in response to the operation performed by the user, the selected data 1 is a segment of text.

Alternatively, as shown in FIG. 7(A), a window 601 may not be first displayed on an interface of an electronic device, and in response to an operation performed by a user, selected data 1 is determined.

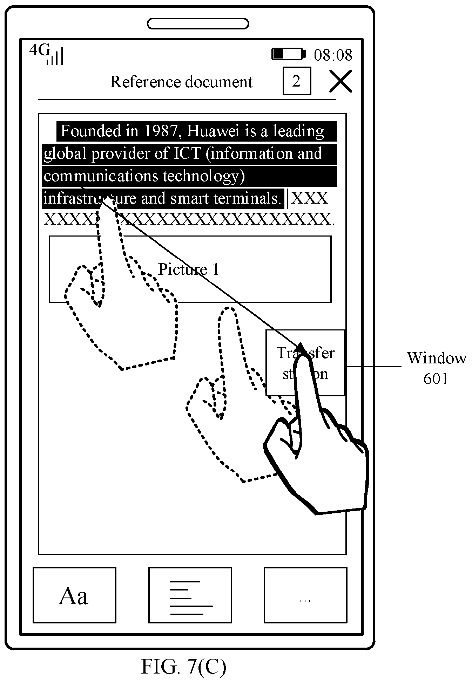

Then, as shown in FIG. 6(B), in response to a drag operation performed by the user, the selected data 1 is copied to the transfer station. A start point of the drag operation may be the selected data, and an end point of the drag operation may be a location of the window 601. Alternatively, as shown in FIG. 7(B), in response to a drag operation performed by the user, the window 601 is displayed when the drag operation performed by the user is close to an edge of a screen. As shown in FIG. 7(C), when an end point of the drag operation performed by the user is a location of the window 601, the selected data 1 is copied to the transfer station.

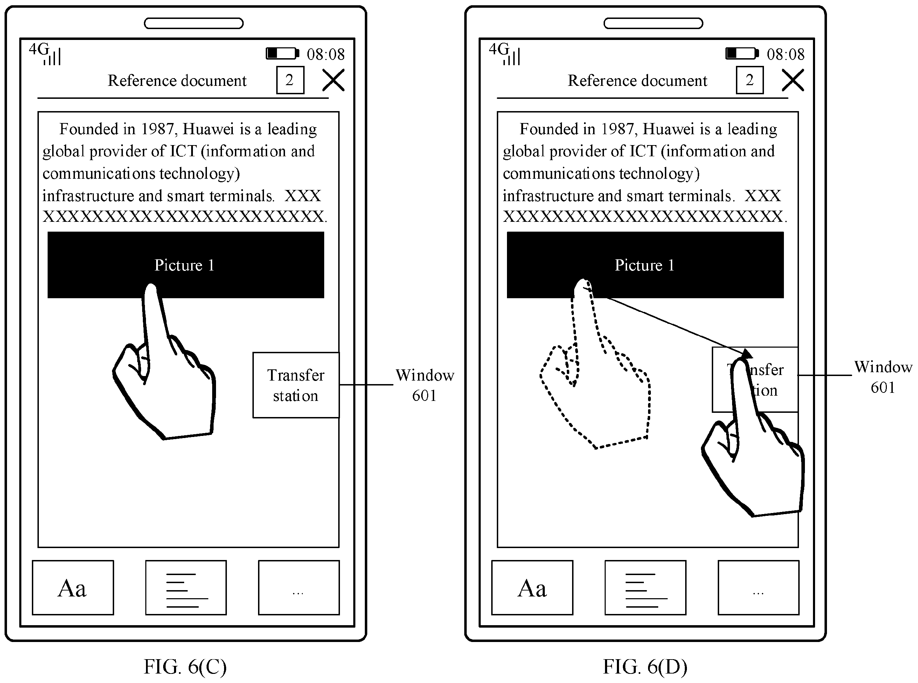

Similarly, as shown in FIG. 6(C), the user may further select a media element in another format or of another type, for example, a picture. In content shown in FIG. 6(C), a picture 1 is selected data 2. As shown in FIG. 6(D), in response to the drag operation performed by the user, the selected data 2 is sent to the transfer station.

It should be noted that, according to the data copying method provided in embodiments of this application, the user can alternatively send data to the transfer station in an interaction manner shown in FIG. 1(B).

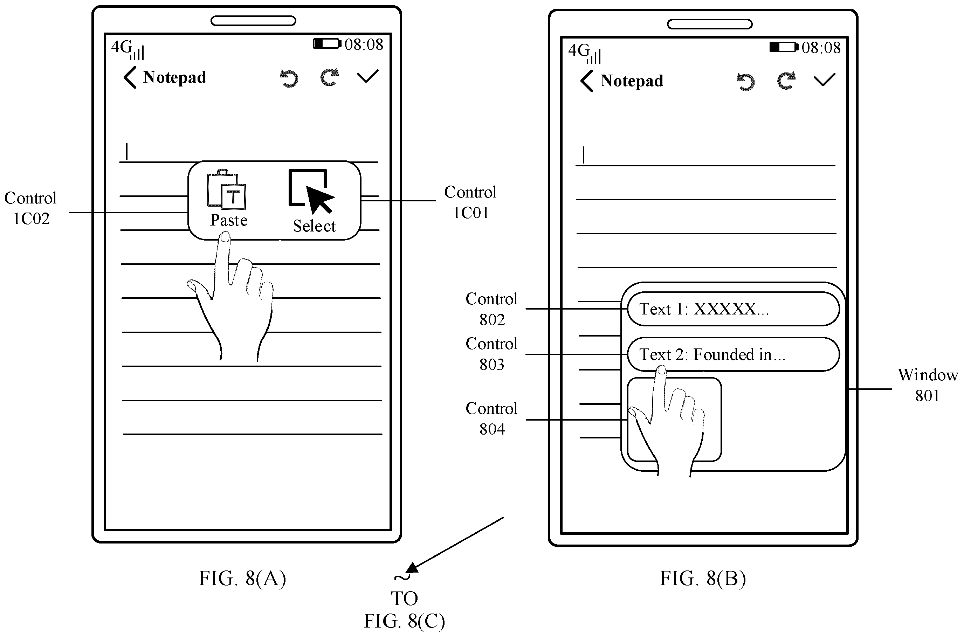

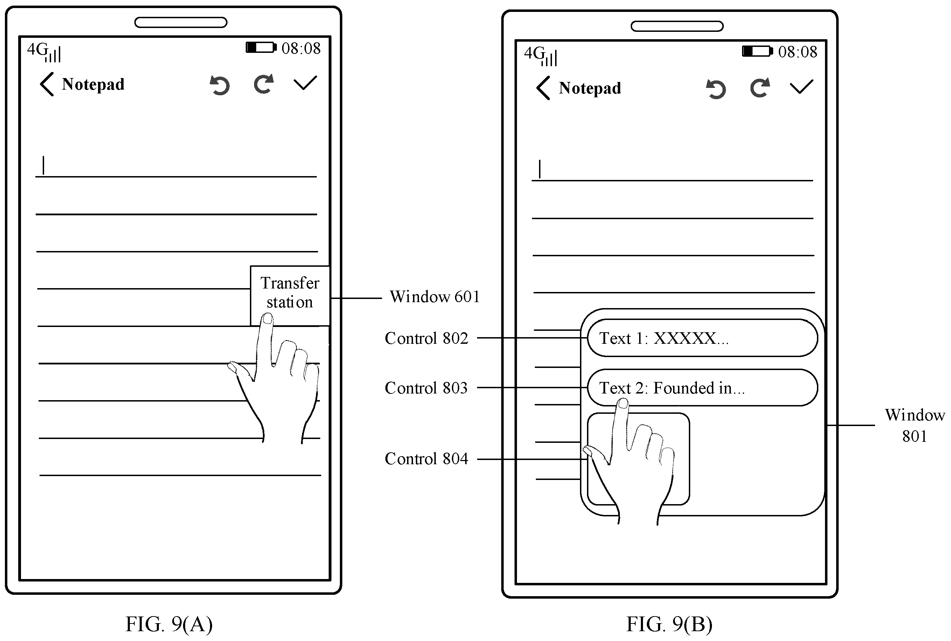

FIG. 8(A) to FIG. 8(D) and FIG. 9(A) to FIG. 9(D) each are another example diagram of a scenario of a copying method according to an embodiment of this application.

As shown in FIG. 8(A) and FIG. 8(B), the user may invoke a control 1C01 on an interface of a target application, and invoke a window 801 by tapping a control 1C02. The window 801 is an interface of the transfer station. In comparison with the foregoing descriptions, it can be learned that the window 601 is another interface of the transfer station.

As shown in FIG. 8(B), data that is previously copied, cut, or dragged by the user is displayed in the window 801 in an expanded form, and a control 802, a control 803, and a control 804 are included. Different controls correspond to different copied data.

In the window 801, an arrangement order of the controls may be related to an order in which data corresponding to the controls enters the transfer station. For example, a control corresponding to data that enters the transfer station later is arranged first. Alternatively, an arrangement order of the controls may be related to a format of data corresponding to the controls. For example, in the transfer station, the controls corresponding to the data are arranged in an order of a text format, a picture format, and another multimedia format. It should be noted that the arrangement order of the controls on the interface of the transfer station is not limited in any form in embodiments of this application.

In the window 801, different data may also be displayed in different forms. For example, when data is a text, the first several texts of the data are displayed on a control corresponding to the data; when data is a picture, a thumbnail of the picture is displayed on a control corresponding to the data; when data is a file, a name and a size of the file are displayed on a control corresponding to the data; and when data is a file, a size and a name of the file may be displayed on a control corresponding to the data.

Optionally, in some embodiments of this application, when data copied, cut, or dragged by the user includes a plurality of pictures, the plurality of pictures may correspond to one control for displaying, and the control displays a special effect like ghosting or shadowing, so that the user is informed that the control corresponds to a plurality of pieces of data. Then, after the user taps the control, a plurality of child controls that respectively corresponds to the plurality of pictures are displayed in the window 801.

It should be noted that one control in the window corresponds to one item, and one copy or drag operation performed by the user may correspond to a plurality of items. For example, if the user copies or drags a plurality of paragraphs of texts at a time, the plurality of paragraphs of texts may correspond to one item, or the plurality of paragraphs of texts may correspond to a plurality of items, where a quantity of items is the same as a quantity of paragraphs. If the user copies or drags pictures in a plurality of albums at a time, the plurality of albums may correspond to one item, or the plurality of albums may correspond to a plurality of items. When the plurality of albums correspond to one item, after the user taps a control corresponding to the item or the user performs another operation, the item is expanded into a plurality of sub-items, where a quantity of sub-items may be the same as a quantity of pictures selected in the albums.

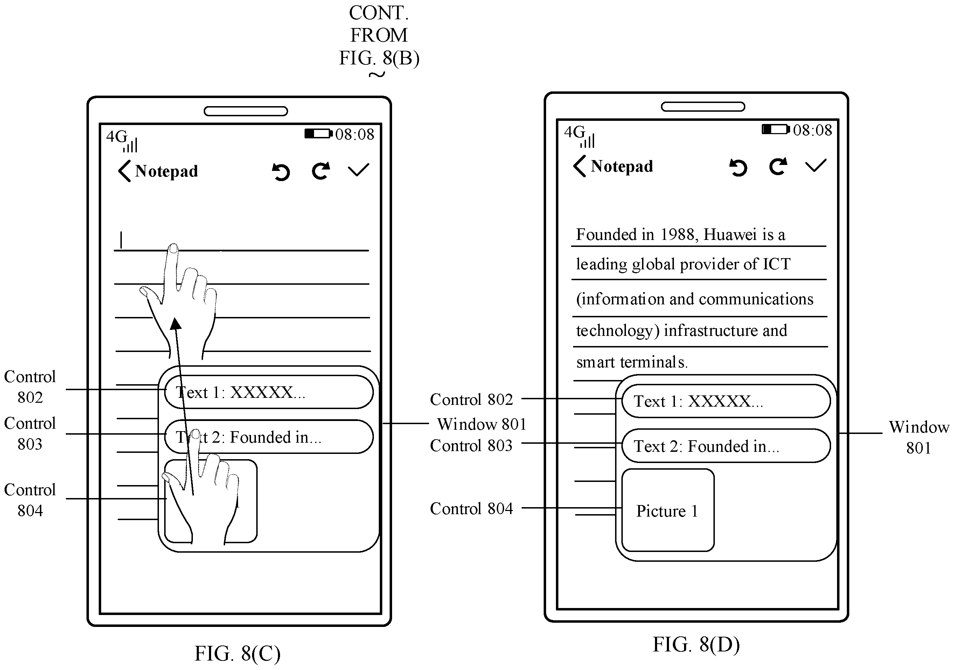

As shown in FIG. 8(C) and FIG. 8(D), the user may select, by selecting a control in the window 801, data that needs to be copied to the target application. Then, the user may copy a text 2 to the target application through dragging or in an interaction manner shown in FIG. 1(C).

In FIG. 8(A) to FIG. 8(D), data corresponding to the control 803 is the selected data 1 in FIG. 6(A) to FIG. 6(D) and FIG. 7(A) to FIG. 7(C), and data corresponding to the control 804 is the selected data 2 in FIG. 6(A) to FIG. 6(D) and FIG. 7(A) to FIG. 7(C).

As shown in FIG. 9(A), the user may alternatively invoke a window 601 on an interface of a target application by performing a preset operation, and then tap the window 601, so that the interface of the transfer station changes to an expanded form, for example, a window 801.

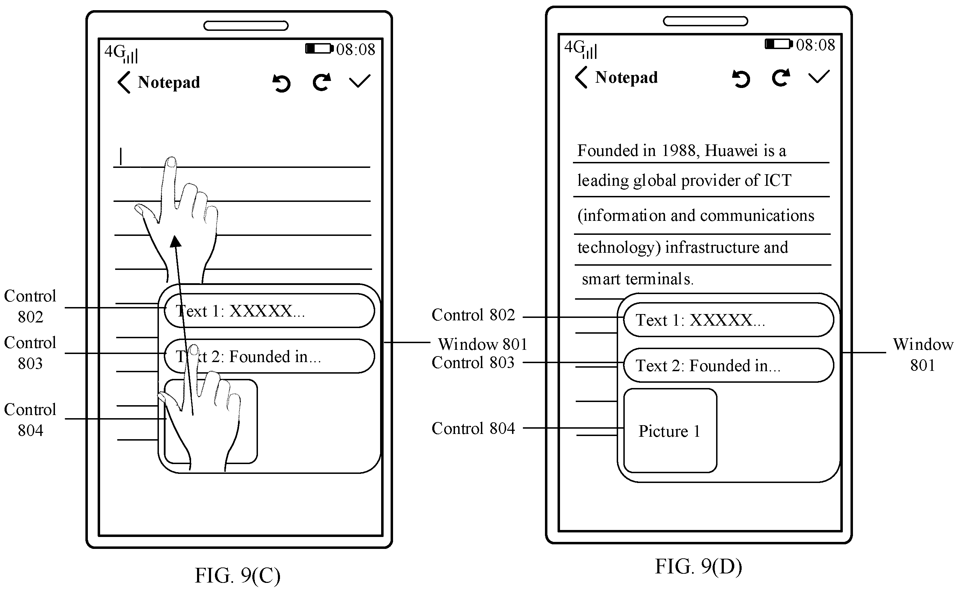

Content shown in FIG. 9(B), FIG. 9(C), and FIG. 9(D) is the same as that shown in FIG. 8(B), FIG. 8(C), and FIG. 8(D). For details, refer to the foregoing descriptions. Details are not described herein again.

It should be noted that the user may copy data in different applications to the transfer station. That is, there may be a plurality of source applications, which is not limited to one source application.

### Scenario 2: Modify the data in the transfer station.

According to the data copying method provided in embodiments of this application, the user may further adjust an arrangement order of controls corresponding to data. In addition, the user can select a plurality of controls at a time, that is, the user can copy a plurality of pieces of data to the target application by performing one operation.

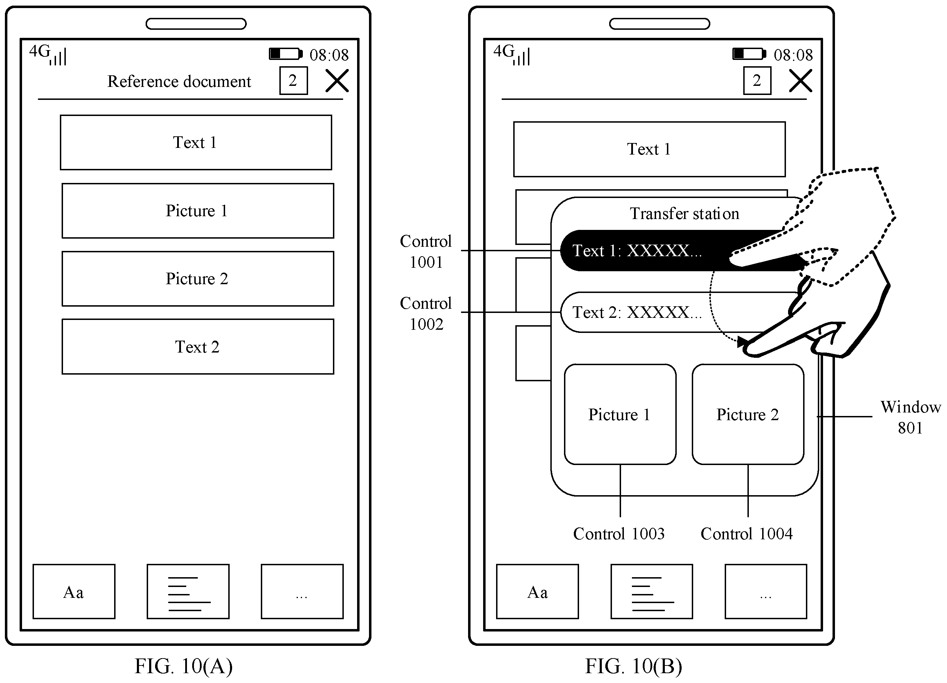

FIG. 10(A) to FIG. 10(D) are another example diagram of a scenario of a data copying method according to an embodiment of this application.

As shown in FIG. 10(A), content displayed in the target application is a text 1, a picture 1, a picture 2, and a text 2. A user may copy the text 1, the picture 1, the picture 2, and the text 2 to the transfer station by performing the foregoing operations shown in FIG. 7(A) to FIG. 7(C) or FIG. 6(A) to FIG. 6(D).

Controls corresponding to different data, namely, a control 1001 corresponding to the text 1, a control 1002 corresponding to the text 2, a control 1003 corresponding to the picture 1, and a control 1004 corresponding to the picture 2 are displayed in the window 801.

In addition, the transfer station may modify, based on a format of a file, an arrangement order of a control that corresponds to the file and that is in the transfer station.

Optionally, in some embodiments of this application, the transfer station may not modify an arrangement order of data based on a format of a file.

The user may adjust an arrangement order of different controls in the window 801, or may delete some controls to delete, from the transfer station, data corresponding to the controls, or may edit the data in the transfer station. For example, as shown in FIG. 10(B), the user may select the control 1001, and then adjust a relative order of the control 1001 and the control 1002 by moving the control 1001.

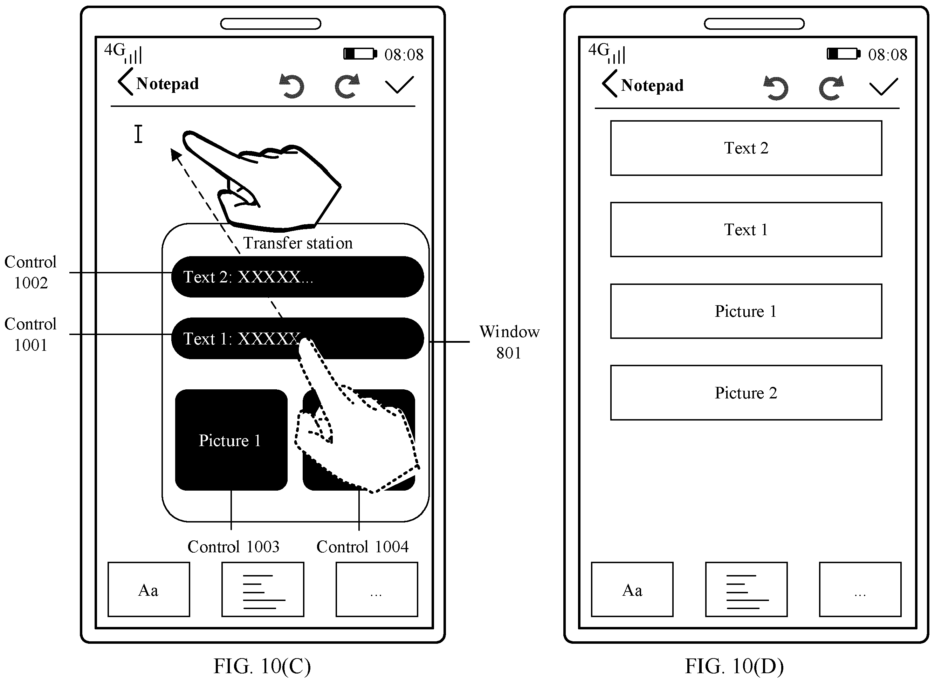

As shown in FIG. 10(C), the user may select a plurality of controls, and copy the data to the target application by performing a drag operation. The target application is a notepad application.

As shown in FIG. 10(D), an internal arrangement order of the data copied to the target application is consistent with an arrangement order of the data in the transfer station. To be specific, the copied data in the target application is arranged as follows: the text 2, the text 1, the picture 1, and the picture 2.

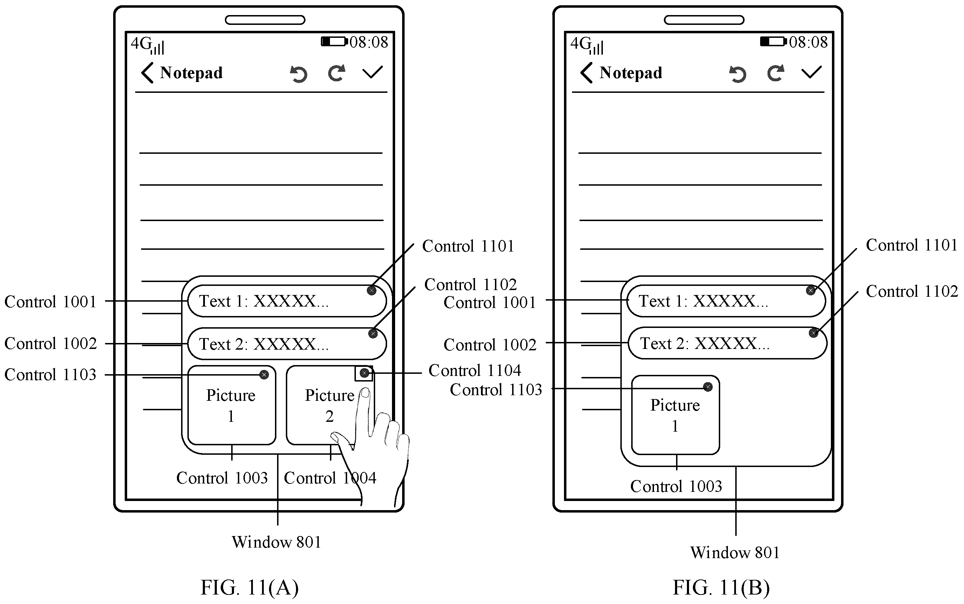

FIG. 11(A) and FIG. 11(B) are another example diagram of a scenario of a data copying method according to an embodiment of this application.

As shown in FIG. 11(A), in addition to displaying, on the interface of the transfer station, the controls corresponding to the different data, a control configured to delete data corresponding to the control is further displayed on each control. For example, a control 1101 is displayed on the control 1001 corresponding to the text 1, a control 1102 is displayed on the control 1002 corresponding to the text 2, a control 1103 is displayed on the control 1003 corresponding to the picture 1, and a control 1104 is displayed on the control 1004 corresponding to the picture 2. The control 1101, the control 1102, the control 1103, and the control 1104 are respectively configured to delete the control 1001, the control 1002, the control 1003, and the control 1004.

For example, after the user taps the control 1104, the control 1004 is deleted, as shown in FIG. 10(B). In this case, the transfer station stores data of the text 1, the text 2, and the picture 1.

### Scenario 3: Use historical clip data.

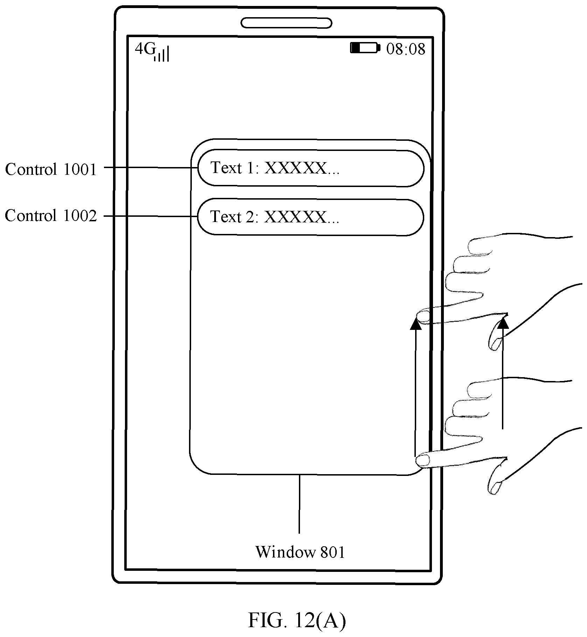

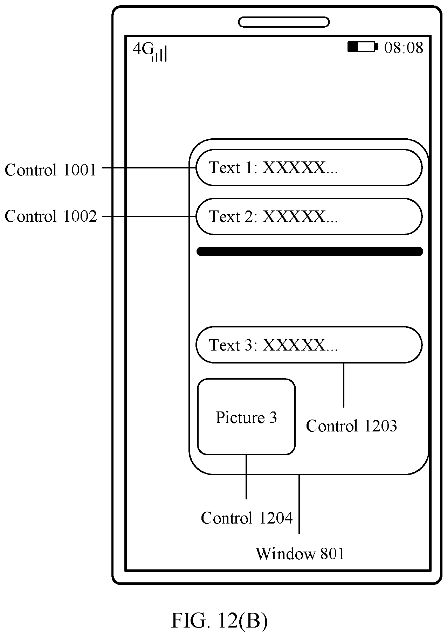

FIG. 12(A) and FIG. 12(B) are another example diagram of a scenario of a data copying method according to an embodiment of this application.

When the electronic device displays the window 801, the user may perform an operation like flicking down or flicking up, and then a control corresponding to the historical clip data is displayed in the window 801. As shown in FIG. 12(A), a control 1203 and a control 1204 are displayed in the window 801. In response to the flick-up operation performed by the user, as shown in FIG. 12(B), a control 1203 and a control 1204 are displayed in the window 801. The control 1203 corresponds to a text 3, and the control 1204 corresponds to a picture 3.

The text 3 and the picture 3 are the historical clip data.

A manner of distinguishing non-historical clip data from the historical clip data is not limited herein. For example, the non-historical clip data and the historical clip data may be distinguished based on time at which the data enters the transfer station. For another example, the non-historical clip data and the historical clip data may be distinguished based on whether the interface of the transfer station is closed. For another example, a quantity threshold may be configured, and the non-historical clip data and the historical clip data is sorted based on an order of time at which the data enters the transfer station. Data whose order exceeds the quantity threshold is the historical clip data.

For example, if a time interval between time at which each of the text 3 and the picture 3 enters the transfer station and time at which the user opens the interface of the transfer station this time is greater than a time interval, and a time interval between time at which each of the text 1 and the text 2 enters the transfer station and time at which the user opens the interface of the transfer station this time is less than a time interval, the text 1 and the text 2 are the non-historical clip data, and the text 3 and the picture 3 are the historical clip data.

For another example, after dragging or copying the text 3 and the picture 3 to the transfer station, the user closes the interface of the transfer station, and then the user drags or copies the text 1 and the text 2 to the transfer station. Then, after opening an interface of the target application, the user opens the interface of the transfer station by performing a preset operation. In this case, the text 1 and the text 2 are the non-historical clip data, and the text 3 and the picture 3 are the historical clip data.

It may be understood that, according to the data copying method provided in embodiments of this application, the user can conveniently copy recently copied or dragged data from the transfer station to the target application.

### Scenario 4: Share the data across devices.

The data stored in the transfer station may be shared with another nearby connected electronic device by using a near field wireless communication technology, for example, Wi-Fi, Bluetooth, or NFC; or the data may be synchronized, by using a server, to another electronic device logging in to a same account.

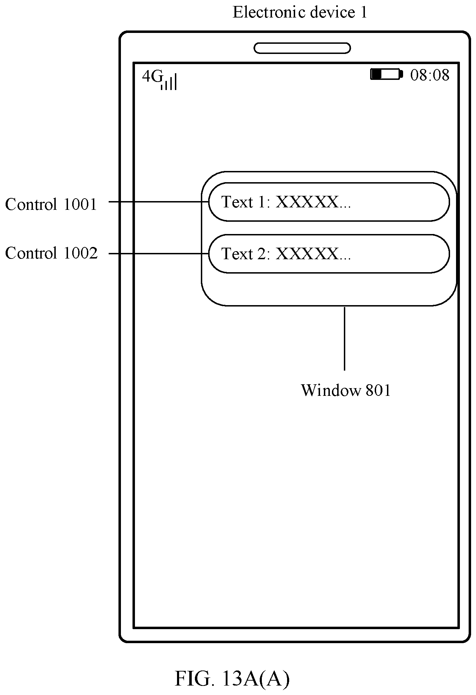

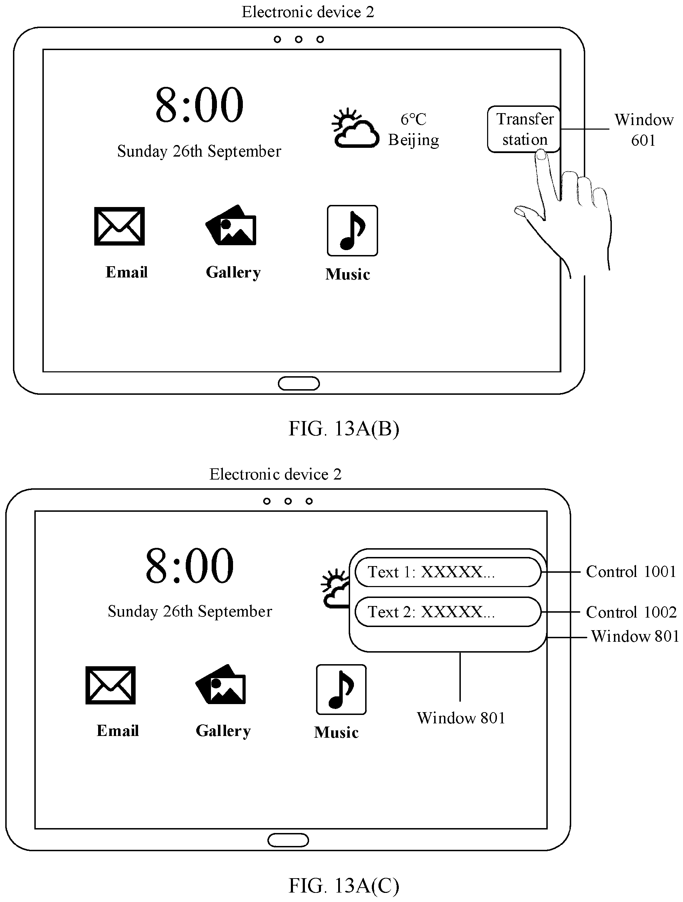

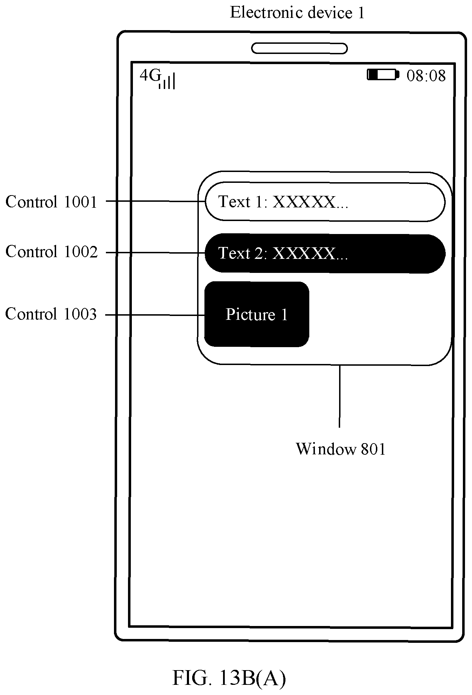

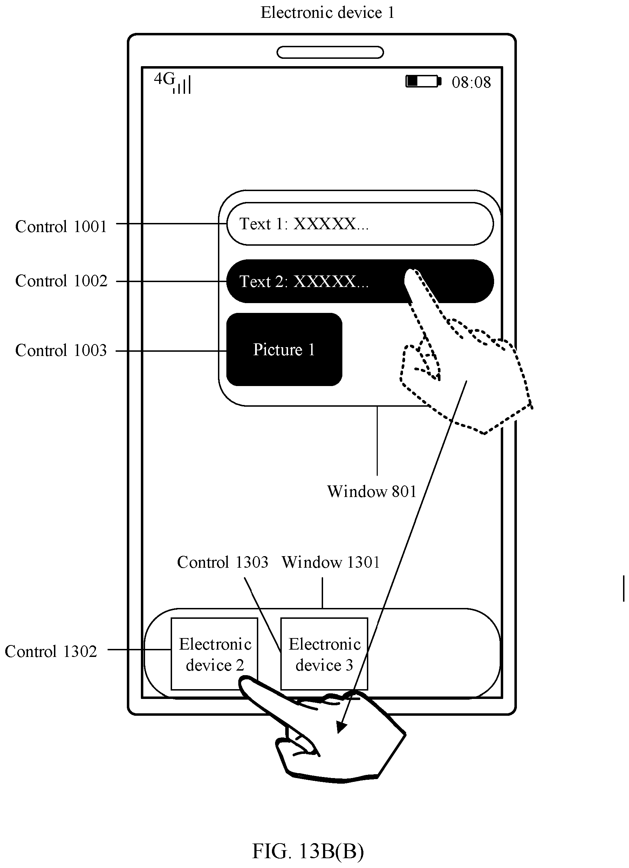

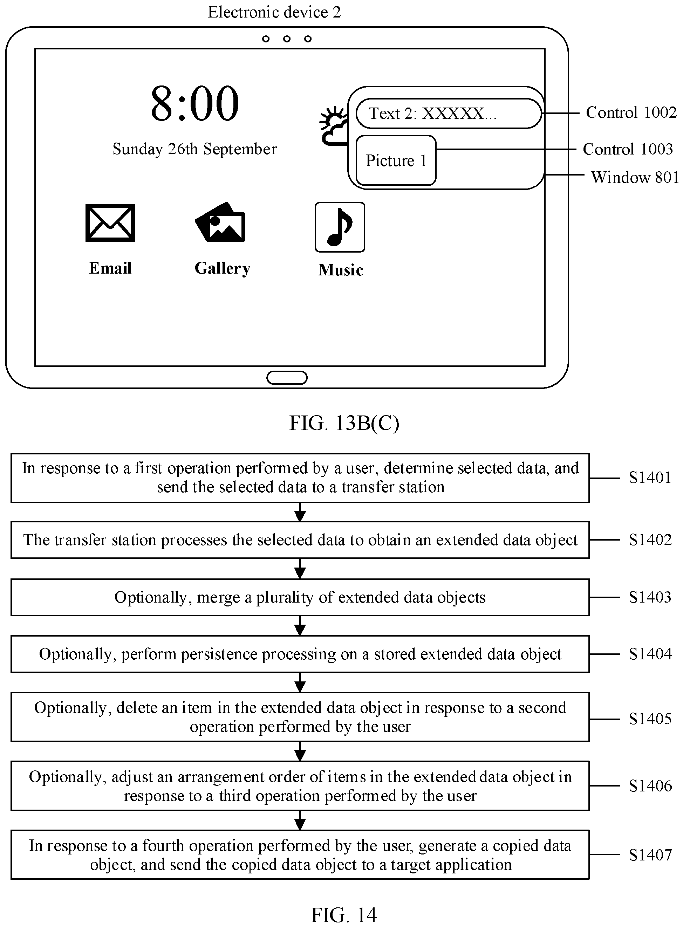

FIG. 13A(A) to FIG. 13A(C) and FIG. 13B(A) to FIG. 13B(C) each are an example diagram of a scenario of a data copying method according to an embodiment of this application.

When a user stores two pieces of data in a recycle bin on an electronic device 1, the two pieces of data are respectively the text 1 corresponding to the control 1001 and the text 2 corresponding to the control 1002, as shown in FIG. 13A(A).

When the electronic device 1 is already connected to an electronic device 2, or when the electronic device 1 and an electronic device 2 log in to a same account, the electronic device 1 synchronizes/sends data in a transfer station to the electronic device 2.

When the user taps a window 601 on the electronic device 2, the transfer station is opened. Then, the controls corresponding to the text 1 and the text 2 that are stored by the user on the electronic device 1 may be viewed in a window 801, as shown in FIG. 13A(B) and FIG. 13A(C).

As shown in FIG. 13B(A) to FIG. 13B(C), a transfer station on an electronic device 1 stores three pieces of data, namely, the text 1 corresponding to the control 1001, the text 2 corresponding to the control 1002, and a picture 1 corresponding to a control 1003, as shown in FIG. 13B(A). The user may select the control 1002 and the control 1003, and then share the text 2 and the picture 1 with another electronic device by performing a drag operation or another operation. For example, as shown in FIG. 13B(B), a start point of the drag operation performed by the user is controls corresponding to selected data, and an end point of the drag operation is a control 1302. The window 1301 includes the control 1302 and a control 1303 that respectively indicate the electronic device 1 and an electronic device 2.

After the user performs the foregoing operation, the text 2 and the picture 1 may be seen on the interface of the transfer station on the electronic device 2. As shown in FIG. 13B(C), the control 1002 and the control 1003 that respectively correspond to the text 2 and the picture 1 appear in a window 801 on the electronic device 2.

It may be understood that, according to the data copying method provided in embodiments of this application, a plurality of cross-device sharing operations do not need to be performed on a plurality of pieces of to-be-shared data, and the data is only copied or dragged to the transfer station, so that the user can more conveniently share content between devices. This improves user experience.

After the data copying method provided in embodiments of this application is described, a method procedure of the data copying method provided in embodiments of this application is described.

FIG. 14 is an example diagram of a method procedure of a data copying method according to an embodiment of this application.

The data copying method provided in this embodiment of this application may include six steps. Step S1403 and step S1404 are optional steps, and trigger occasions of step S1405 and step S1406 are operations performed by a user.

S1401: In response to a first operation performed by the user, determine selected data, and send the selected data to a transfer station.

The first operation performed by the user may be a copy operation, as shown in FIG. 1(B) and FIG. 2(B); or the first operation performed by the user may be a drag operation, as shown in FIG. 6(B) or FIG. 7(B) and FIG. 7(C).

After the selected data is determined, the selected data is sent to the transfer station. The transfer station is a name used to distinguish the clipboard described above, and does not indicate any limitation. The transfer station is a process maintained by a system, and may run in a form of a service (service) or a system application.

Similarly to the content shown in FIG. 3 or FIG. 4, a source application sends, to the transfer station, the data selected by the user.

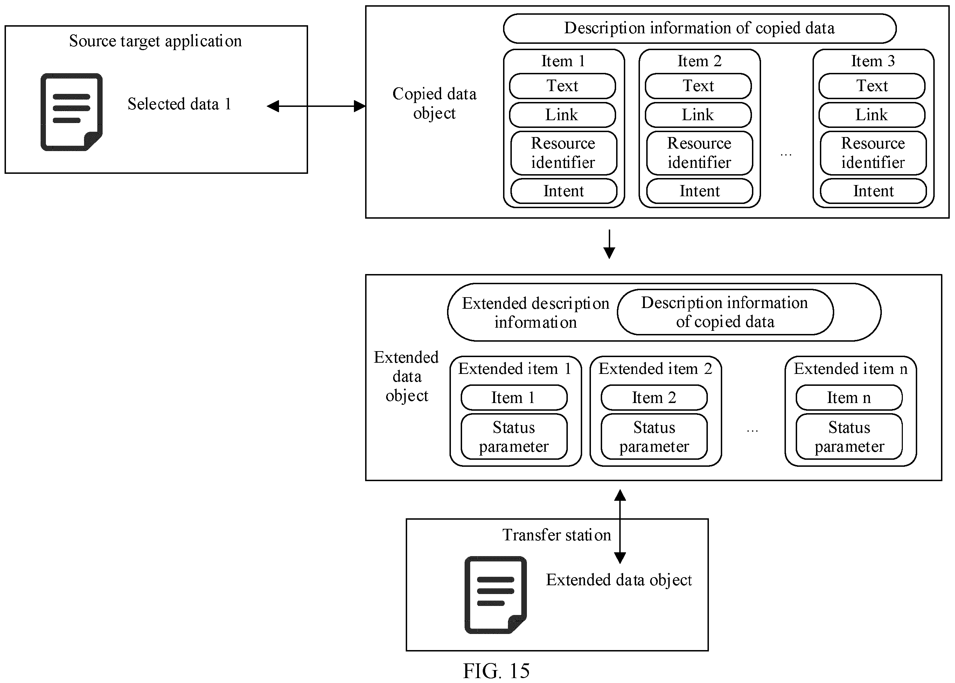

Before the selected data is sent by the source application, the selected data is encapsulated into a ClipData object (a copied data object). An example format of the ClipData object is shown in FIG. 15.

S1402: The transfer station processes the selected data to obtain extended data.

The transfer station processes the ClipData object as an ExtendData object (extended data object). FIG. 15 shows a processing process.

FIG. 15 is an example diagram of converting selected data into an extended data object according to an embodiment of this application.

First, the source application converts the selected data into the ClipData object, and then sends the ClipData object to the transfer station.

The ClipData object is a data structure used to carry content dragged, cut, or copied by the user. The ClipData object includes ClipDescription (description information of copied data) and one or more ClipData.Item items (items). One ClipData object is generated when the user performs one drag, cut, or copy operation. The drag operation is used as an example. When the user drags one piece of content, a ClipData.Item item is stored in the ClipData object generated by the source application, for example, an item 1 in FIG. 15. When the user drags a plurality of pieces of content, a plurality of ClipData.Item items are stored in constructed ClipData, for example, an item 1 to an item n in FIG. 15.

ClipData.Item may include Text (a text), Html (a link), Uri (a resource identifier), and Intent (an intent). If the user drags a text, corresponding text content is stored in Text in the item; or if the user drags a picture or a file, an identifier indicating the picture or the file is stored in Uri in ClipData.Item.

After receiving the ClipData object, the transfer station splits the ClipData object and encapsulates a split ClipData object into the ExtendData object.

Description (extended description information) in the ExtendData object includes original ClipDescription, and ExtendItem (an extended item) of the ExtendData object includes ClipData.Item in an original ClipData object. In addition, compared with ClipData.Item, some status parameters are added to ExtendItem.

The status parameters may include Type, Status, Size, and the like. This is not limited herein. Type is used to mark a type of each piece of content, where common types include text content, a picture, a file, and the like. Because different types of content present different layout display effects, Type further affects a display effect of the extended item, for example, a size of a control in the window 801 in FIG. 8(A) to FIG. 8(D) and content displayed on the control. Status is used to mark a status of each piece of content. The status marks whether current content can be dragged or copied. Some files from another third-party application can be dragged or copied only after being copied. Size is used to mark a size of a file corresponding to the piece of content. If the piece of content corresponds to the file, the value is valid.

It should be noted that Type, Status, and Size described above are merely examples for describing the status parameters, and the status parameters may alternatively include another parameter. This is not limited herein.

An ExtendItem list is maintained in the ExtendData object, and the ExtendItem list records ExtendItem in the ExtendData object. The ExtendItem list is used to support the user in deleting an item in the transfer station and adjusting an order of the items, as shown in content in FIG. 10(A) to FIG. 10(D) and FIG. 11(A) and FIG. 11(B) above.

It should be noted that a format of data transmission between a source target application and the transfer station is the ClipData object. To support the user in editing the ClipData object, in the data copying method provided in embodiments of this application, the ClipData object is split and encapsulated in the transfer station to obtain the extended data object. The extended data object may support operations, such as deletion, order adjustment, dragging, and copying, performed by the user on an item level.

A transfer station process may convert one or more ExtendItem items into the ClipData object. After the user completes an editing operation, like deletion or multiple selection, on each item, when the user drags an edited item or selects a plurality of items and shares the plurality of items with another device, a new ClipData object is recreated based on ClipDescription in Description and ExtendItem in the ExtendItem list that are in the ExtendData object, and the ClipData object is transferred to the target application.

It may be understood that, for the ExtendData object provided in this embodiment of this application, because the status parameters are added first, a robust data basis is provided for implementation of a visualized interface of the transfer station.

S1403: Optionally, merge a plurality of extended data objects.

Before the transfer station processes the data sent by the source application to the transfer station, the transfer station already stores the ExtendData object. In this case, the transfer station may merge a plurality of pieces of extended data, so that the transfer station stores only one continuously changing ExtendData object; or the transfer station stores the plurality of ExtendData objects, where the plurality of ExtendData objects respectively correspond to different drag or copy operations performed by the user.

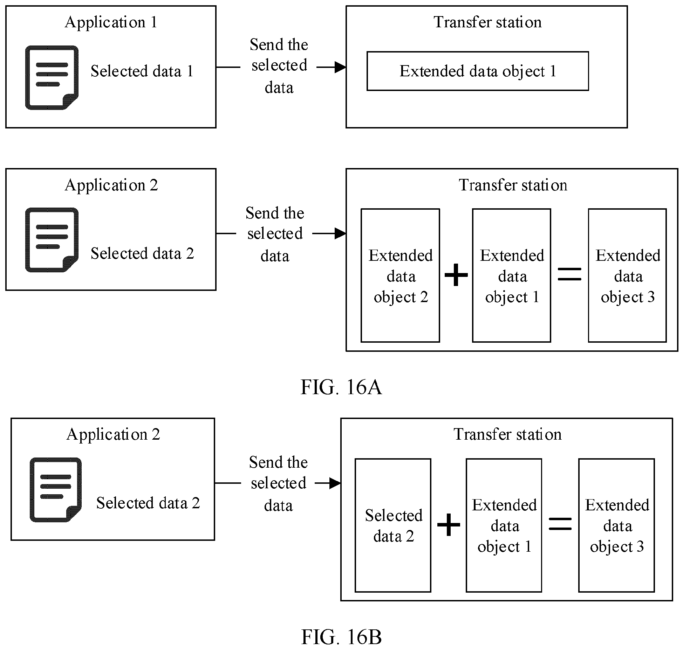

FIG. 16A and FIG. 16B each are an example diagram of merging extended data according to this application.

As shown in FIG. 16A, after an application 1 sends selected data 1 to the transfer station, the transfer station converts a ClipData object corresponding to the selected data 1 into an ExtendData object, namely, an extended data object 1 in FIG. 16A; and then an application 2 sends, to the transfer station, a ClipData object corresponding to selected data 2. After receiving the ClipData object corresponding to the selected data 2, the transfer station may convert the ClipData object into an ExtendData object, and then merge the extended data objects corresponding to the two pieces of data, that is, an extended data object 2 in FIG. 16A. As shown in FIG. 16A, the transfer station merges the extended data object 1 and the extended data object 2, to generate an extended data object 3.

Alternatively, after an application 1 sends selected data 1 to the transfer station, the transfer station converts a ClipData object corresponding to the selected data 1 into an ExtendData object, namely, an extended data object 1 in FIG. 16A. Then, an application 2 sends, to the transfer station, a ClipData object corresponding to selected data 2. Finally, the transfer station merges, into a new ExtendData object, the ClipData object corresponding to the selected data 2 and the ExtendData object corresponding to the selected data 1. As shown in FIG. 16A, the transfer station merges the selected data 2 and the extended data object 1, to generate an extended data object 3.

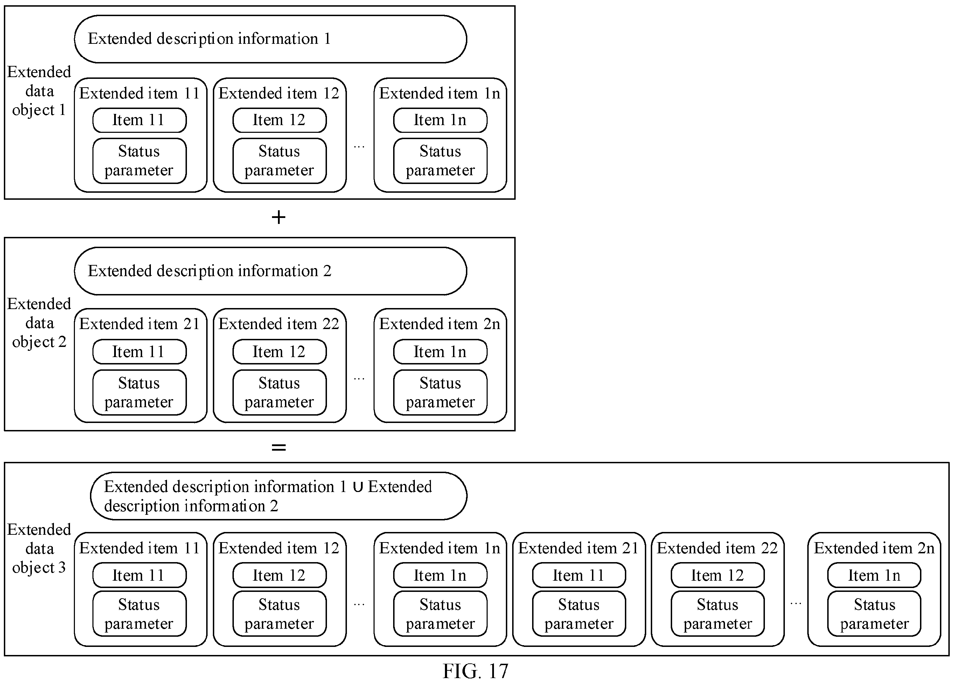

FIG. 17 is an example diagram of merging ExtendData objects according to an embodiment of this application.

When extended data objects are merged, a union set of MimeType of Description of the merged ExtendData objects is obtained, an ExtendItem list of a new generated ExtendData object is expanded, and ExtendItem items of the merged ExtendData objects are sequentially added. Alternatively, a new ExtendData object may be generated by extending a merged ExtendData object. For example, in any merged ExtendData object, a union set of MimeType of Description of the merged ExtendData object is obtained, and an ExtendItem list of another merged ExtendData object is added to an ExtendItem list.

As shown in FIG. 17, an extended data object 1 and an extended data object 2 are merged to generate an extended data object 3; ExtendItem of the extended data object 3 includes ExtendItem of the extended data object 1 and ExtendItem of the extended data object 2; and Description of the extended data object 3 is equivalent to a union set of extended description information 1 and extended description information 2, that is, a union set of MimeType is obtained.

S1404: Optionally, perform persistence processing on the stored extended data objects.

The transfer station may perform persistence processing on the stored data, that is, store the data in memory space of the process into a hard disk or another storage medium of an electronic device, so that the data is not lost due to destruction of the transfer station. Correspondingly, the transfer station may also read, into the memory space of the process, the data stored in the hard disk or another storage medium of the electronic device, to facilitate use by the user.

The transfer station may perform step S1404 at a plurality of trigger occasions. This is not limited herein. For example, the transfer station may perform persistence processing on the ExtendData object at a fixed time interval. For another example, the transfer station may perform persistence processing on the ExtendData object after the ExtendData object changes, where the change may be that the user deletes a specific item or adjusts an order of different items. For another example, the transfer station may perform persistence processing on the ExtendData object after an interface of the transfer station is closed.

Correspondingly, the transfer station also restores a persistent ExtendData object to the memory space of the process corresponding to the transfer station at a plurality of trigger occasions. This is not limited herein. For example, when a status of the interface of the transfer station is switched from a non-display state to a display state, the transfer station restores the persistent ExtendData object. For another example, for the content shown in FIG. 12(A) and FIG. 12(B), when the user performs an operation like flicking up or flicking down to enable the window 801 to display historical clip data, the transfer station restores the persistent ExtendData object.

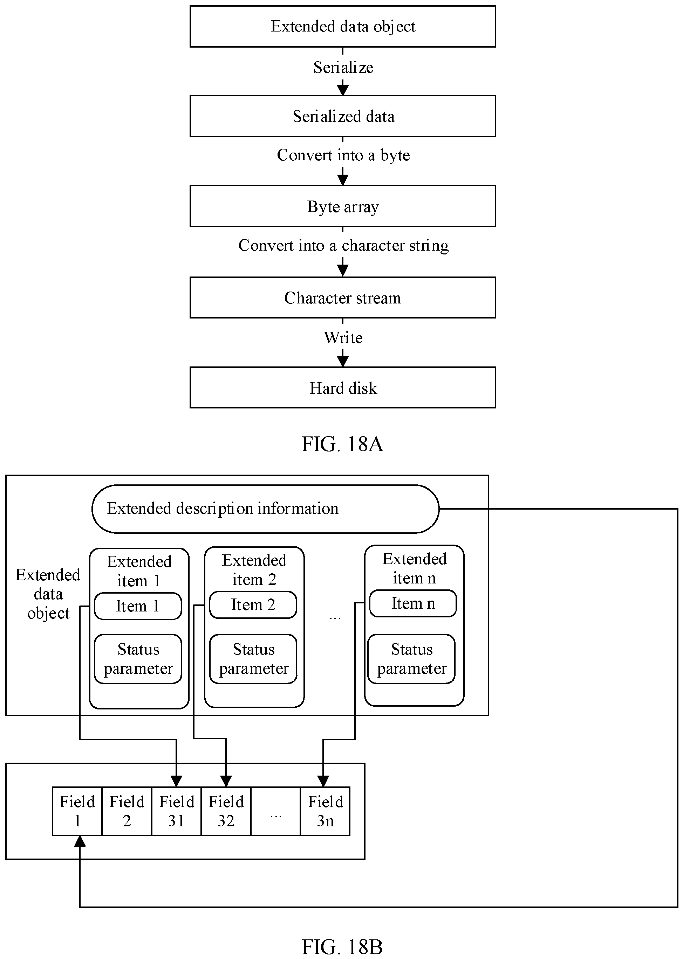

FIG. 18A is an example diagram of performing persistence processing on data according to an embodiment of this application.

First, the transfer station may sequentially perform serialization based on Description, a quantity of ExtendItem items, and content of ExtendItem. Serialization of Description may be implemented according to a writeToParcel method of ClipDescription. After Description is serialized, the quantity of ExtendItem items is written into serialized data. If the quantity of ExtendItem items is 0, 0 is written. Then, the content of Extend Item is sequentially serialized. First, ClipData.Item is serialized, and then fields such as a status parameter are written into the serialized data.

Optionally, in some embodiments of this application, the transfer station may serialize the ExtendData object in another order. This is not limited herein.

Then, after serialization is performed, the serialized data is converted into a byte array. For example, the serialized data may be converted into the byte array according to a parcel#marshall method.

Further, the byte array is converted into a character stream. For example, the byte array is converted into the character stream according to a base64.encodeToString method.

Finally, the character stream is written into a file through an I/O operation, to implement persistent storage.

It should be noted that the transfer station process may read data from the hard disk or another storage medium of the electronic device to the memory space of the process in an order opposite to that in FIG. 18A, to implement persistent restoration of the ExtendData object.

First, the transfer station reads a character string from a persistent file through the I/O operation.

Then, the character stream is decoded into a byte array. For example, the character stream is decoded into the byte array by invoking a Base64.decode method.

Further, the byte array is converted into serialized data. For example, the byte array is converted into the serialized data according to a Parcel#unmarshall method.

Finally, after the serialized data is obtained, Description, a quantity of Extend Item items, and content of Extend Item are sequentially deserialized from the serialized data in a serialization order. In a deserialization process, if it is determined that the quantity of ExtendItem items is not 0, deserialization continues to be performed. Then, the content of ExtendItem is obtained, an ExtendItem list is restored, and the ExtendData object is finally restored. If it is determined that the quantity of ExtendItem items is 0, deserialization is terminated. For example, Description is deserialized according to a CREATE#createFromParcel method.

FIG. 18B is an example diagram of performing persistence processing on data according to an embodiment of this application.

After persistence processing is performed on the ExtendData object according to the method shown in FIG. 18A, the electronic device stores a correspondence between a file and an ExtendData object.

The file includes a field 1, a field 2, a field 31, a field 32, ..., and a field 3n. The field 1 corresponds to extended description information, the field 2 corresponds to a quantity of extended items, and the field 31 to the field 3n correspond to an extended item 1 to an extended item n.

Optionally, in some embodiments of this application, the ExtendData object may alternatively be stored in a hard disk or another storage medium of an electronic device by using an SQlite database or a component like Content Provider or SharedPreferences.

It may be understood that persistence processing is performed on the ExtendData object according to the method shown in FIG. 18A. First, it can be ensured that relative locations of parameters such as Description and ExtendItem of the ExtendData object are not disordered, so that the ExtendData object can be quickly restored locally. In addition, compared with other persistence manners, in the method shown in FIG. 18A, fewer system resources are consumed. The method is a lightweight persistence manner, and does not depend on another system component, and therefore is applicable to a plurality of operating systems including Android.

S1405: Optionally, delete an item in the extended data object in response to a second operation performed by the user.

As shown in the foregoing content shown in FIG. 11(A) and FIG. 11(B), in response to tapping the control 1104 by the user, the control 1104 in the window 801 is deleted, and correspondingly, the transfer station also deletes ExtendItem in the ExtendData object.

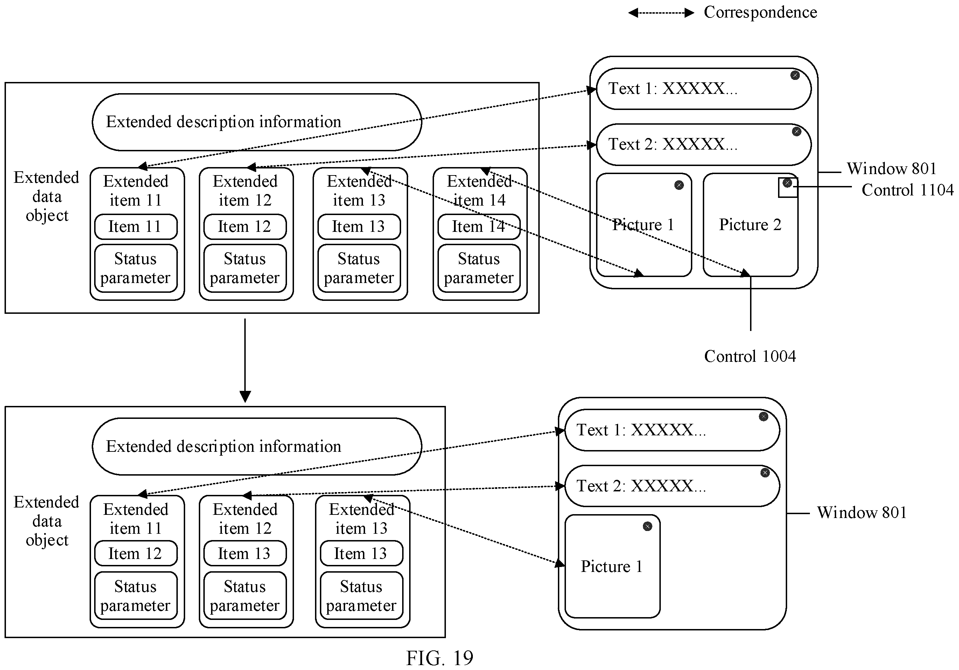

FIG. 19 is an example diagram of deleting ExtendItem according to an embodiment of this application.

With reference to the content shown in FIG. 11(A) and FIG. 11(B) and FIG. 19, after the user taps the control 1104, the transfer station deletes ExtendItem corresponding to the control 1004. In the content shown in FIG. 19, a text 1 corresponds to an extended item 1, a text 2 corresponds to an extended item 2, a picture 1 corresponds to an extended item 3, and a picture 2 corresponds to an extended item 4.

After the user taps the control 1104, the transfer station deletes the extended item 4. Correspondingly, the control 1004 is not displayed in the window 801.

S1406: Optionally, adjust an arrangement order of the items in the extended object in response to a third operation performed by the user.

As shown in FIG. 10(B), the user may adjust a relative arrangement order of the text 1 and the text 2. In this case, the transfer station may correspondingly adjust an arrangement order of different ExtendItem items.

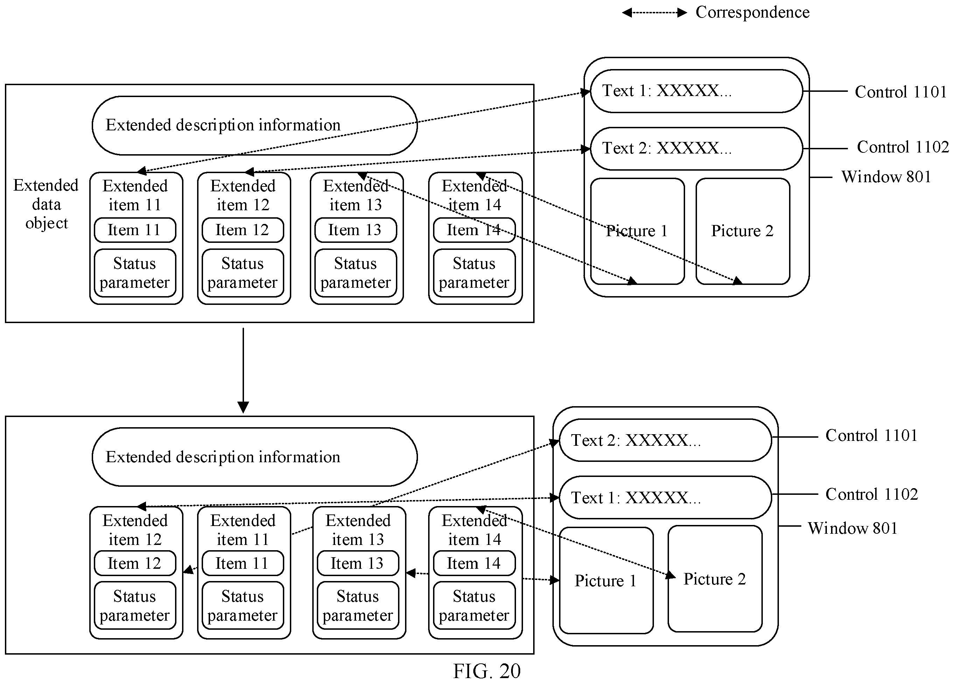

FIG. 20 is an example diagram of adjusting an arrangement order of ExtendItem according to an embodiment of this application.

As shown in FIG. 20, the text 1 corresponds to the extended item 1, the text 2 corresponds to the extended item 2, the picture 1 corresponds to the extended item 3, and the picture 2 corresponds to the extended item 4. After the user performs an operation to adjust locations of the control 1101 and the control 1102, that is, after the user adjusts an arrangement order of the text 1 and the text 2 in the window, the transfer station may alternatively modify the arrangement order of ExtendItem in the extended data object, that is, modify an order of the extended item 11 and the extended item 12.

S1407: In response to a fourth operation performed by the user, generate a copied data object, and send the copied data object to the target application.

As shown in the foregoing content in FIG. 8(A) to FIG. 8(D), FIG. 9(A) to FIG. 9(D), and FIG. 10(A) to FIG. 10(D), in response to a drag or copy operation performed by the user, the transfer station process generates a ClipData object, and sends the ClipData object to the target application.

The target application may be a process or an application on another device, or the target application may be another application or another process on a local electronic device. When the target application is a transfer station on another electronic device, sent data may be the ExtendData object instead of the ClipData object. Alternatively, when the target application may parse the ExtendData object, the data sent by the transfer station may be the ExtendData object instead of the ClipData object.

When the user performs a drag or copy operation, new ClipData is obtained by reorganizing ClipDescription in Description of the ExtendData object and ClipData.Item corresponding to each ExtendItem item in the ExtendItem list, and then ClipData is sent to the target application.

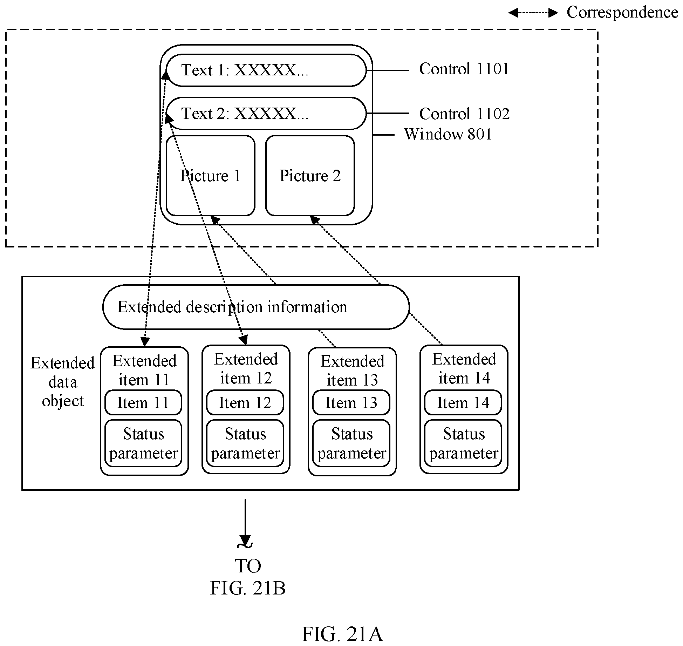

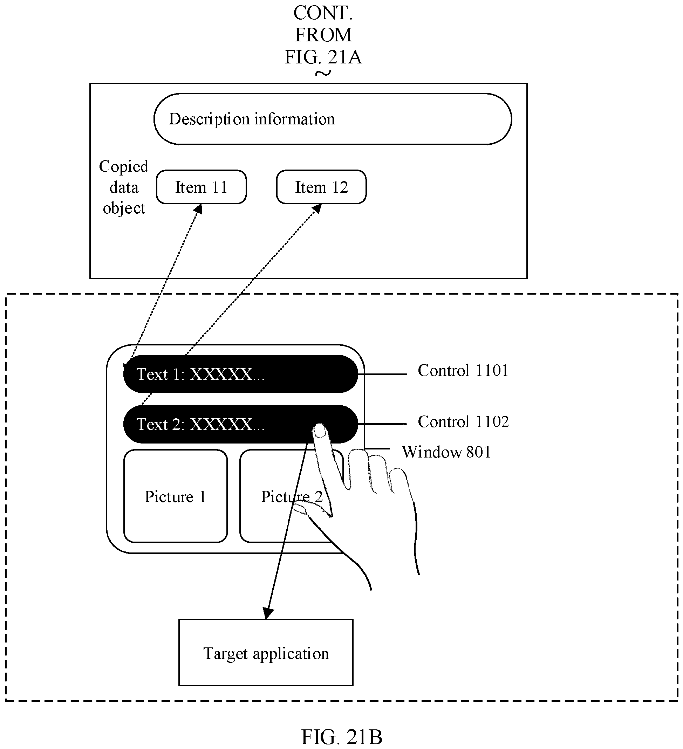

FIG. 21A and FIG. 21B are an example diagram of generating a ClipData object and sending the ClipData object to the target application according to an embodiment of this application.

As shown in FIG. 21A and FIG. 21B, when the user does not select a plurality of pieces of data in the window 801 and perform a drag or copy operation, the transfer station may store one ExtendData object or a plurality of ExtendData objects. After the user selects the control 1101 and the control 1102, that is, after the user selects the text 1 and the text 2 and performs the drag or copy operation, the transfer station generates a ClipData object corresponding to the text 1 and the text 2. The ClipData object is data used to be sent to the target application. The ClipData object includes ClipDescription and ClipData.Item corresponding to the data. To be specific, the ClipData object includes description information corresponding to the text 1 and the text 2, and further includes the item 1 and the item 2.

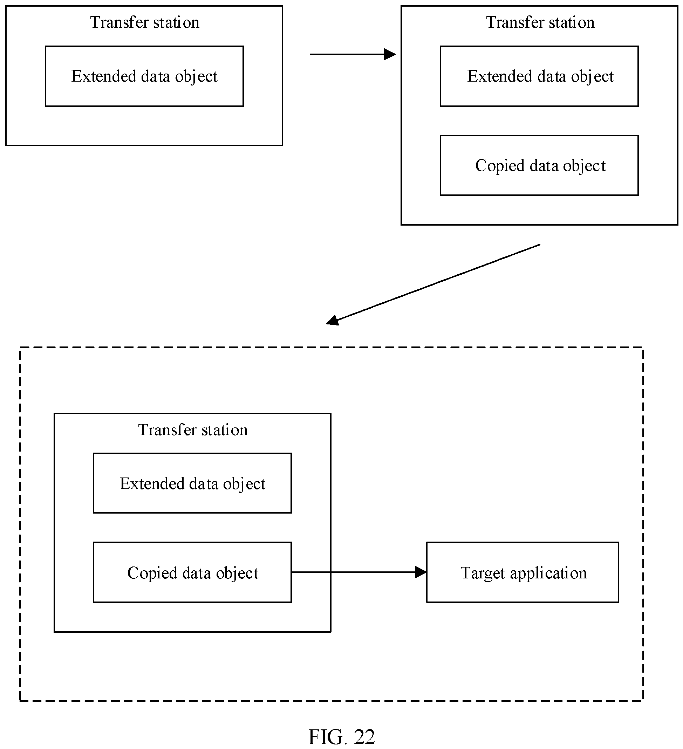

FIG. 22 is another example diagram of generating a ClipData object and sending the ClipData object to the target application according to an embodiment of this application.

As shown in FIG. 22, when the user does not perform a drag or copy operation, the transfer station stores an ExtendData object. After the user performs the drag or copy operation, the transfer station generates a ClipData object, and then sends the ClipData object to the target application, so that the target application may receive and correctly parse the ClipData object.

It may be understood that, to improve compatibility of the transfer station, the data is sent in a format that can be parsed by the target application. That is, the ExtendData object is converted into the ClipData object. It should be noted that when the format that can be parsed by the target application is another format, data in another format may also be sent. The data in the another format is not limited to the ClipData object, and the data in the another format may be obtained by converting the extended data object.

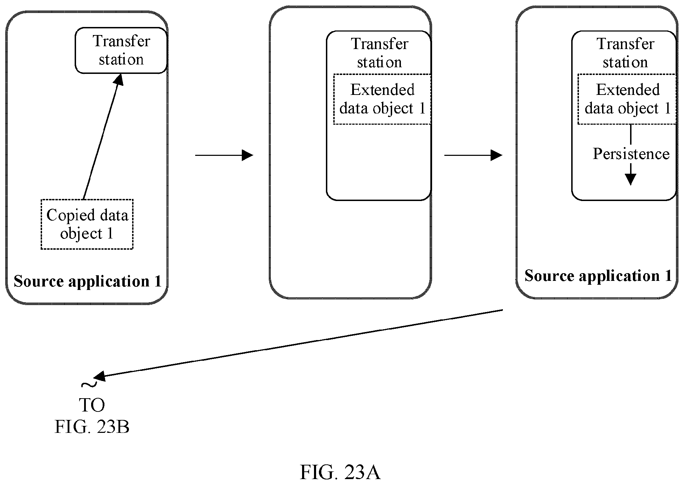

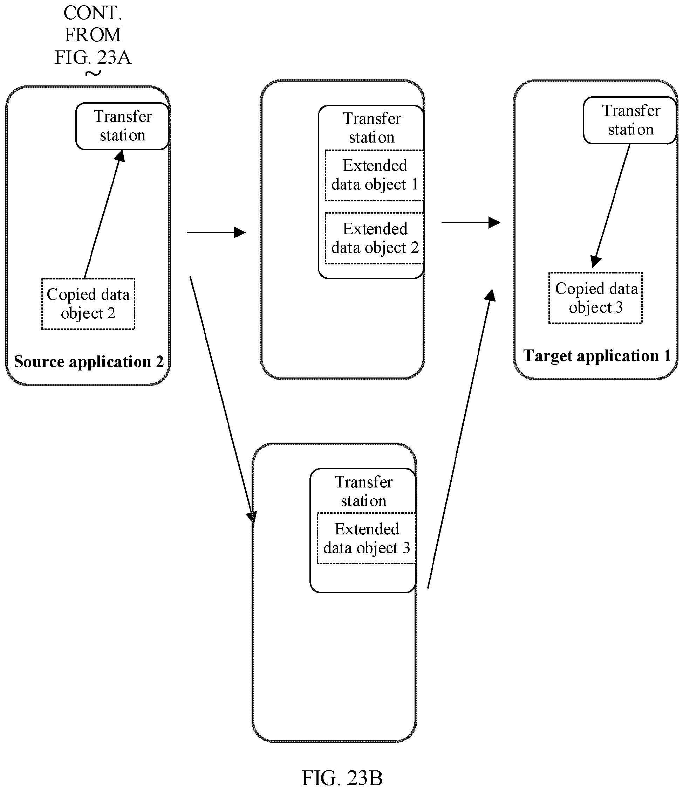

FIG. 23A and FIG. 23B are an example diagram of a data procedure of a data copying method according to an embodiment of this application.

As shown in FIG. 23A and FIG. 23B, first, a user may drag or copy selected data 1 in a source application 1 to a transfer station by performing a drag or copy operation, and the source application 1 may send a ClipData object, to the transfer station, corresponding to the selected data 1. The ClipData object corresponding to the selected data 1 is a copied data object 1.

Then, the transfer station disassembles the ClipData object and encapsulates a disassembled ClipData object into an ExtendData object. That is, the copied data object 1 is converted into an extended data object 1. The transfer station may adjust a display effect of each ClipData.Item item based on a status parameter of the extended data object 1. For example, if ClipData.Item is text content, the first several segments of texts are displayed; or if ClipData.Item is picture content, a thumbnail of specific content of a picture is displayed; or if ClipData.Item is file content, a file icon, a file name, and a file size are displayed.

Further, before the user actively disables displaying of the transfer station or destroys the process corresponding to the transfer station, or a system destroys the process corresponding to the transfer station, persistence processing may be performed on data of the transfer station, that is, persistence processing is performed on the extended data object 1.

Further, the user may drag or copy selected data 2 in a source application 2 to the transfer station, and the source application 2 may send a ClipData object, to the transfer station, corresponding to the selected data 2. The ClipData object corresponding to the selected data 2 is a copied data object 2.

Further, the transfer station may have at least two processing manners. One processing manner is to store a new extended data object 3, where the extended data object 3 stores the selected data 1 and the selected data 2; or the other processing manner is to store the extended data object 1 and an extended data object 2.

Finally, after switching to the target application, the user may choose to drag or copy some or all data in the selected data 1 and the selected data 2. Correspondingly, the transfer station generates a corresponding copied data object 3 and sends the copied data object 3 to the target application. It should be noted that the copied data object 3 does not correspond to the extended data object 3, but corresponds to the data copied or dragged by the user after the user switches to the target application.

It may be understood that, according to the data copying method provided in this embodiment of this application, persistence and restoration of a ClipData object corresponding to dragged, cut, or copied content are implemented, and then persistence and restoration of copied, cut, or dragged data are implemented. This improves stability and fault tolerance of reusing the ClipData object, and greatly optimizes user experience.

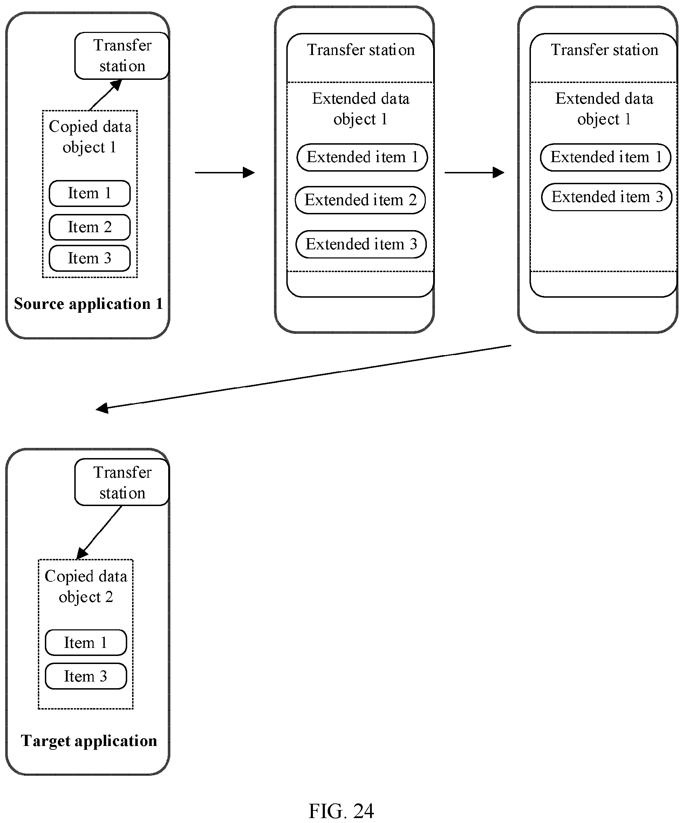

FIG. 24 is another example diagram of a data procedure of a data copying method according to an embodiment of this application.

As shown in FIG. 24, first, a user may send, to a transfer station by performing a drag, copy, or cut operation, selected data corresponding to a plurality of pieces of content such as a picture, a text, and a file that are selected by a source application. The plurality of pieces of content sequentially correspond to an item 1, an item 2, and an item 3. The source application converts the selected data into a ClipData object, and then transfers the ClipData object to a comparison file.

Then, after receiving the ClipData object carrying the plurality of pieces of content, the transfer station correspondingly converts the ClipData object into an ExtendData object, and adjusts display effects of different ClipData.Item items or ExtendItem items based on a status parameter. After the transfer station provides a visualized interface for ClipData.Item or ExtendItem, the user may perform an operation like deleting the data or adjusting a relative location of the data. After the user deletes the item 2, the item 1 and the item 3 are displayed.

Finally, in the target application, the user may enable, by performing an operation like dragging or copying, the transfer station to construct a ClipData object corresponding to the item 1 and the item 3, and send the ClipData object to the target application. That is, data copying is completed.

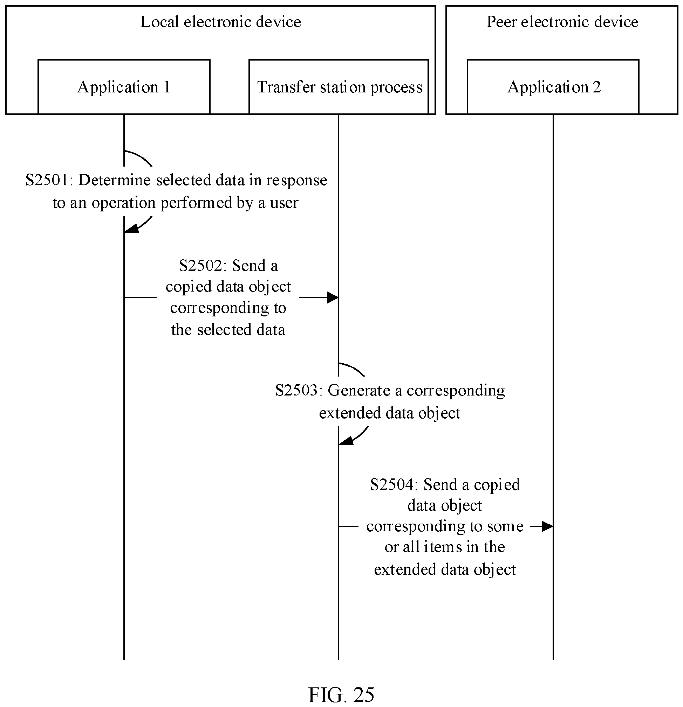

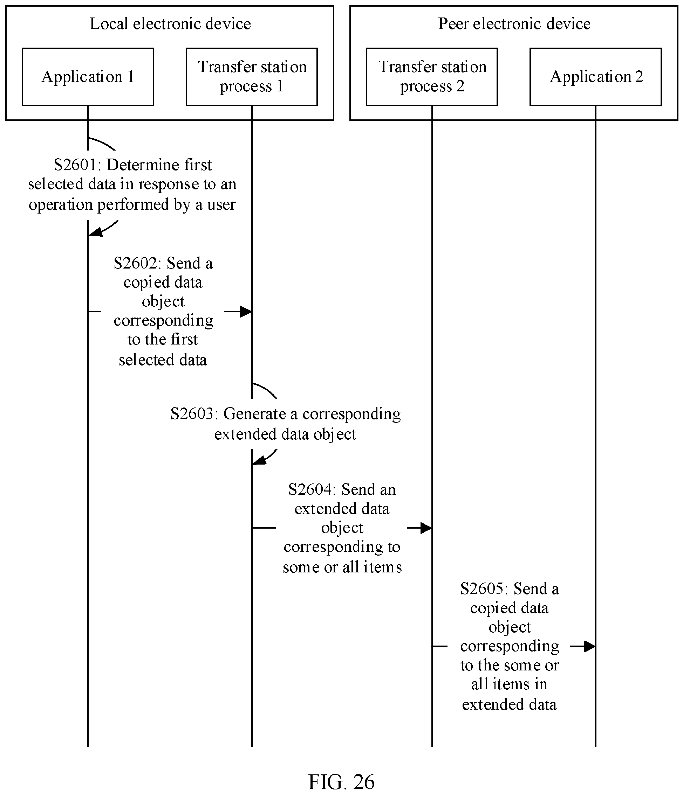

FIG. 25 and FIG. 26 each are an example diagram of a data procedure of a data copying method in a cross-device scenario according to an embodiment of this application.

As shown in FIG. 25, in a cross-device scenario, the data copying method includes four steps.

S2501: Determine selected data in response to an operation performed by a user.

For a manner of determining the selected data, refer to the foregoing descriptions. Details are not described herein again.

S2502: Send a copied data object corresponding to the selected data.

After determining the selected data, an application 1 converts the selected data into a ClipData object, and then sends, to a transfer station process, the ClipData object corresponding to first selected data.

S2503: The transfer station generates a corresponding extended data object.

The transfer station generates the corresponding ExtendData object and stores the ExtendData object.

S2504: Send a copied data object corresponding to some or all items in the extended data object.

The transfer station on a local electronic device sends, to an application 2 on a peer electronic device, the ClipData object corresponding to the some or all items selected by the user.

As shown in FIG. 26, different from FIG. 25, when there is a transfer station process on a peer electronic device, a transfer station process 1 sends a copied data object to a transfer process 2 on the peer electronic device.

S2601: Determine first selected data in response to an operation performed by a user.

This step is the same as step S2501, and details are not described herein again.

S2602: Send a copied data object corresponding to the first selected data.

After determining the selected data, an application 1 converts the selected data into a ClipData object, and then sends, to the transfer station process 1, the ClipData object corresponding to the first selected data.

S2603: Generate a corresponding extended data object.

This step is the same as step S2503, and details are not described herein again.

S2604: Send an extended data object corresponding to some or all items.

The transfer station process 1 on a local electronic device sends, to the transfer station process 2 on the peer electronic device, the ExtendData object corresponding to the some or all items.

Optionally, in some embodiments of this application, the transfer station process 1 on the local electronic device sends, to the transfer station process 2 on the peer electronic device, a ClipData object corresponding to the some or all items.

S2605: Send a copied data object corresponding to the some or all items in the extended data object.

Content of this step is the same as that of step S2504 described above, and details are not described herein again.

Finally, a hardware structure and a software architecture of an electronic device provided in embodiments of this application are described.

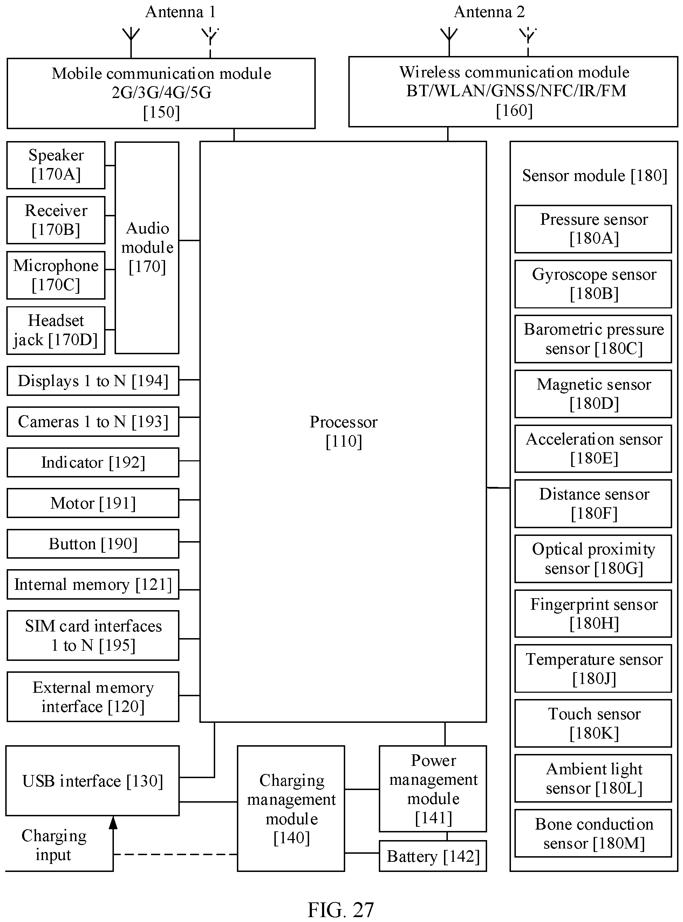

FIG. 27 is an example diagram of a hardware structure of an electronic device according to an embodiment of this application.

The electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of the present invention does not constitute a specific limitation on the electronic device. In some other embodiments of this application, the electronic device may include more or fewer components than those shown in the figure, or a combination of some components, or splits from some components, or an arrangement of different components. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device.

The I2S interface may be configured to perform audio communication. The PCM interface may also be configured to perform audio communication, and sample, quantize, and code an analog signal. The UART interface is a universal serial data bus, and is configured to perform asynchronous communication. The bus may be a bidirectional communication bus. The bus converts to-be-transmitted data between serial communication and parallel communication. The MIPI interface may be configured to connect the processor 110 to a peripheral component like the display 194 or the camera 193. The MIPI interface includes a camera serial interface (camera serial interface, CSI), a display serial interface (display serial interface, DSI), and the like.

The GPIO interface may be configured by using software. The GPIO interface may be configured as a control signal or a data signal. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like.

It may be understood that an interface connection relationship between the modules that is shown in embodiments of the present invention is merely an example for description, and does not constitute a limitation on a structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from a charger. The charger may be a wireless charger or a wired charger. The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution, applied to the electronic device, to wireless communication including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium- and highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in the same device as the mobile communication module 150 or another functional module.

The wireless communication module 160 may provide a solution, applied to the electronic device, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device may include one or N displays 194, where N is a positive integer greater than 1.

The electronic device may implement a photographing function through the ISP, the camera 193, the video codec, the GPU, the display 194, the application processor, and the like.

The ISP is configured to process data fed back by the camera 193. The camera 193 is configured to capture a static image or a video. The digital signal processor is configured to process a digital signal, and may process another digital signal in addition to the digital image signal. The video codec is configured to compress or decompress a digital video. The NPU is a neural-network (neural-network, NN) computing processor. The NPU quickly processes input information by referring to a structure of a biological neural network, for example, by referring to a mode of transfer between human brain neurons, and may further continuously perform self-learning. Applications such as intelligent cognition of the electronic device, for example, image recognition, facial recognition, speech recognition, and text understanding, may be implemented through the NPU.

The internal memory 121 may be one or more random access memories (random access memory, RAM), and one or more non-volatile memories (non-volatile memories, NVMs).

The random access memory may include a static random-access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM is generally referred to as a DDR5 SDRAM), and the like.

The non-volatile memory may include a magnetic disk storage device and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia memory card (embedded multimedia Card, eMMC), and the like according to storage specifications.

The random access memory may be directly read and written by the processor 110, may be configured to store executable programs (for example, machine instructions) in an operating system or another running program, and may be configured to store data of a user, data of an application, and the like.

The non-volatile memory may also store the executable programs, the data of the users and the applications, and the like, which may be loaded into the random access memory in advance to be directly read and written by the processor 110.

The external memory interface 120 may be configured to connect to an external non-volatile memory, to extend a storage capability of the electronic device. The external non-volatile memory communicates with the processor 110 through the external memory interface 120, to implement a data storage function. For example, files such as music and videos are stored in the external non-volatile memory.

The electronic device may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal for an output, and is also configured to convert an analog audio input into a digital audio signal. The audio module 170 may be further configured to code and decode an audio signal.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194.

The gyroscope sensor 180B may be configured to determine a motion posture of the electronic device. The barometric pressure sensor 180C is configured to measure barometric pressure. The magnetic sensor 180D includes a Hall sensor. The electronic device may detect opening and closing of a flip leather case by using the magnetic sensor 180D. The acceleration sensor 180E may detect accelerations of the electronic device in various directions (usually on three axes). The distance sensor 180F is configured to measure a distance. The optical proximity sensor 180G may include, for example, a light-emitting diode (LED), and an optical detector like a photodiode. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch device". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor, to determine a type of a touch event. A visual output related to the touch operation may be provided through the display 194.

The bone conduction sensor 180M may obtain a vibration signal.

The button 190 includes a power button, a volume button, and the like. The button 190 may be a mechanical button, or may be a touch button. The electronic device may receive a button input, and generate a button signal input related to user settings and function control of the electronic device.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device. The electronic device may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 is also compatible with different types of SIM cards. The SIM card interface 195 is also compatible with an external memory card. The electronic device interacts with a network through the SIM card, to implement functions such as a call and data communication. In some embodiments, the electronic device uses an eSIM, namely, an embedded SIM card. The eSIM card may be embedded into the electronic device, and cannot be separated from the electronic device.

In embodiments of this application, a transfer station may store ExtendData in a non-volatile memory, to implement persistence of ExtendData.

In embodiments of this application, the electronic device may send a ClipData object or ExtendData to a peer electronic device through the mobile communication module 150 or the wireless communication module 160.

A software system of the electronic device may use a layered architecture, an event-driven architecture, a microkernel architecture, a microservice architecture, or a cloud architecture. In this embodiment of the present invention, an Android system of a layered architecture is used as an example to describe a software structure of the electronic device.

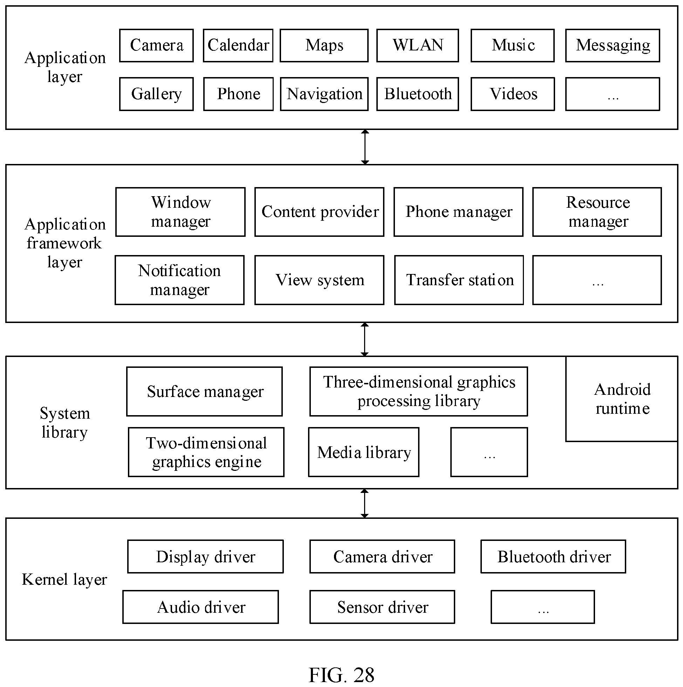

FIG. 28 is an example diagram of a software architecture of an electronic device according to an embodiment of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 28, the application packages may include applications such as Camera, Gallery, Calendar, Phone, Maps, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 28, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification message may automatically disappear after a short pause without a user interaction. For example, the notification manager is configured to notify download completion, give a message notification, and the like. The notification manager may further display a notification in a form of a graph or a scroll bar text in a top status bar of the system, for example, a notification of an application that is run in a background, or may display a notification in a form of a dialog window on a screen. For example, text information is displayed in the status bar, a prompt tone is made, the electronic device vibrates, or an indicator blinks.

In embodiments of this application, the application framework layer may further include a transfer station. The transfer station may receive a ClipData object that corresponds to the selected data and that is sent by an application at the application layer, and send, to the application at the application layer, the ClipData object corresponding to the selected data.

Alternatively, the transfer station may be a system-level application at the application layer.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (Media Library), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playback and recording in a plurality of commonly used audio and video formats, and static image files. The media library may support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

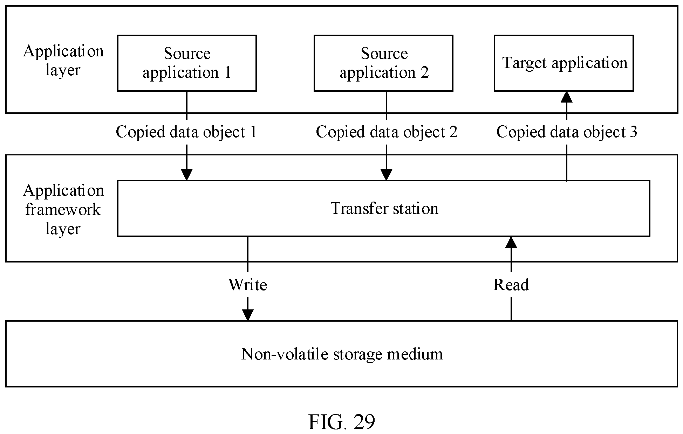

FIG. 29 is another example diagram of a software architecture of an electronic device according to an embodiment of this application.

As shown in FIG. 29, a transfer station may receive one or more copied data objects sent by one or more source applications. For example, the transfer station may receive a copied data object 1 sent by a source application 1 and a copied data object 2 sent by a source application 2.

The transfer station may also send a copied data object 3 to a target application.

The transfer station may also write an ExtendData object into a non-volatile storage medium, or may read an ExtendData object from a non-volatile storage medium.

According to context, the term "when..." used in the foregoing embodiments may be interpreted as a meaning of "if...", "after...", "in response to determining...", or "in response to detecting...". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the methods in embodiments may be implemented by a computer program instructing related hardware. The program may be stored in a computer-readable storage medium. When the program is executed, the procedures in the foregoing method embodiments may be performed. The foregoing storage medium includes any medium that can store program code, for example, a ROM, a random access memory RAM, a magnetic disk, or an optical disc.

## Claims

1. A data copying method, applied to an electronic device and comprising:
determining, by the electronic device in response to receiving a first operation performed by a user, first selected data by using a first source application, and sending the first selected data to a first process, wherein the first operation is copying, cutting, or dragging, and the first selected data comprises at least one of a picture, a text paragraph, and a file;
converting, by the electronic device, the first selected data into a first extended data object by using the first process, wherein the first extended data object comprises the first selected data and a first status parameter, and the first status parameter is used to describe at least a format of data in the first selected data; and
displaying, by the electronic device, a first window in response to receiving a second operation performed by the user, wherein the first window is used to display data comprising the first selected data, and data in different formats is displayed in different manners.

2. The method according to claim 1, wherein the method further comprises:
determining, by the electronic device by using the first process and based on the status parameter, manners of displaying the data in different formats in the first window.

3. The method according to claim 2, wherein the determining, by the electronic device by using the first process and based on the status parameter, manners of displaying the data in different formats in the first window specifically comprises:
when the first selected data comprises a plurality of pieces of data, and a plurality of controls corresponding to the plurality of pieces of data exist in the first window,
determining, by the first process, an internal arrangement order of the plurality of controls based on the status parameter.

4. The method according to claim 3, wherein the arrangement order is a text, a picture, and a file.

5. The method according to any one of claims 1 to 4, wherein the status parameter comprises a format parameter, and the format parameter is used to identify the format of the data; and
the status parameter further comprises at least one of a size parameter and a copy parameter, the size parameter is used to identify a size of the data, and the copy parameter is used to identify whether the data is copied to memory space of the first process.

6. The method according to claim 1 or 2, wherein after the displaying, by the electronic device, a first window in response to receiving a second operation performed by the user, the method further comprises:
when content displayed in the first window comprises a first control, the first control corresponds to first data, and the first data belongs to the first selected data,
in response to receiving a third operation performed by the user on the first control, skipping displaying, by the electronic device, the first control in the first window, and deleting the first data by using the first process.

7. The method according to claim 1 or 2, wherein after the displaying, by the electronic device, a first window in response to receiving a second operation performed by the user, the method further comprises:
when content displayed in the first window comprises a first control and a second control, data corresponding to the first control belongs to the first selected data, and the first control is displayed at a first location of the first window,
displaying, by the electronic device, the second control at a second location of the first window in response to receiving a fourth operation performed by the user on the first control, wherein the first location is different from the second location.

8. The method according to claim 1 or 2, wherein after the displaying, by the electronic device, a first window in response to receiving a second operation performed by the user, the method further comprises:
when content displayed in the first window comprises a plurality of controls, each of the plurality of controls corresponds to one piece of data in the first selected data, and the controls corresponds to different data,
in response to receiving a fifth operation performed by the user on the plurality of controls, sending, by the electronic device by using the first process, the data corresponding to the plurality of controls to a target application, wherein the fifth operation is a drag operation; or in response to receiving a sixth operation performed by the user on the plurality of controls and a seventh operation performed by the user on an interface of a target application, sending, by the electronic device by using the first process, the data corresponding to the plurality of controls to the target application, wherein the sixth operation is an operation used to select the plurality of controls, and the seventh operation is a paste operation.

9. The method according to claim 8, wherein the sending, by the electronic device by using the first process, the data corresponding to the plurality of controls to a target application specifically comprises:
determining, by the electronic device by using the first process and based on the plurality of controls, the data corresponding to the plurality of controls;
generating, by the electronic device by using the first process, a first copied data ClipData object based on the first extended data object and the data corresponding to the plurality of controls; and
sending, by the electronic device, the first copied data ClipData object to the target application by using the first process.

10. The method according to any one of claims 1 to 7, wherein the method further comprises:
storing, by the electronic device, the first extended data object into a non-volatile storage medium by using the first process.

11. The method according to claim 10, wherein the storing, by the first process, the first extended data object into a non-volatile storage medium specifically comprises:
serializing, by the electronic device, the first extended data object by using the first process, to obtain a first serialized object;
converting, by the electronic device, the first serialized object into a first byte array by using the first process;
converting, by the electronic device, the first byte array into a first character string by using the first process; and
writing, by the electronic device, the first character string into the non-volatile storage medium by using the first process.

12. The method according to claim 1 or 2, wherein after the converting, by the electronic device, the first selected data into a first extended data object by using the first process, the method further comprises:
determining, by the electronic device in response to receiving an eighth operation performed by the user, second selected data by using a second source application, and sending the second selected data to the first process, wherein the eighth operation is copying, cutting, or dragging, and the second selected data comprises at least one of a picture, a text paragraph, and a file; and
converting, by the electronic device, the second selected data and the first extended object into a third extended data object by using the first process; or converting, by the electronic device, the second selected data into a second extended data object by using the first process.

13. The method according to claim 12, wherein the method further comprises:
when the first window comprises a plurality of controls, and data corresponding to the plurality of controls belongs to the first selected data and the second selected data,
in response to receiving a ninth operation performed by the user on the plurality of controls, sending, by the electronic device by using the first process, the data corresponding to the plurality of controls to a target application, wherein the fifth operation is a drag operation; or in response to receiving a tenth operation performed by the user on the plurality of controls and an eleventh operation performed by the user on an interface of a target application, sending, by the electronic device by using the first process, the data corresponding to the plurality of controls to the target application, wherein the tenth operation is an operation used to select the plurality of controls, and the eleventh operation is a paste operation.

14. The method according to claim 1 or 2, wherein
before the determining, by the electronic device in response to receiving a first operation performed by a user, first selected data by using a first source application, and sending the first selected data to a first process, the method further comprises:
determining, by the electronic device in response to receiving a twelfth operation performed by the user, third selected data by using a third source application, and sending the third selected data to the first process, wherein the twelfth operation is copying, cutting, or dragging; and
after the displaying, by the electronic device, a first window, the method further comprises:
displaying, by the electronic device, a third control in the first window in response to receiving a thirteenth operation performed by the user in the first window, wherein data corresponding to the third control belongs to the third selected data.

15. The method according to claim 14, wherein
a time interval between occurrence time of the second operation and occurrence time of the twelfth operation is greater than a time threshold.

16. The method according to claim 14, wherein after the determining, by the electronic device in response to receiving a twelfth operation performed by the user, third selected data by using a third source application, and sending the third selected data to the first process, and before the determining, by the electronic device in response to receiving a first operation performed by a user, first selected data by using a first source application, and sending the first selected data to a first process, the method further comprises:
disabling, by the electronic device, displaying of the first window.

17. The method according to claim 1 or 2, wherein after the displaying, by the electronic device, a first window, the method further comprises:
when the first window comprises a first control, a second control, and a third control, the first control corresponds to first data, the second control corresponds to second data, and the third control is configured to share data with a peer electronic device,
sending, by the electronic device in response to receiving a selection operation performed by the user on the first control and the second control and an operation performed by the user on the third control, the first data and the second data to the peer electronic device by using the first process.

18. The method according to claim 17, wherein the sending, by the electronic device, the first data and the second data to the peer electronic device by using the first process specifically comprises:
sending, by the electronic device, a second copied data ClipData object to the peer electronic device, wherein data corresponding to the second copied data ClipData object comprises the first data and the second data; or
sending, by the electronic device, a second extended data object to the peer electronic device, wherein data of the second extended data object comprises the first data and the second data.

19. The method according to claim 1 or 2, wherein after the converting, by the electronic device, the first selected data into a first extended data object by using the first process, the method further comprises:
sending, by the electronic device, first to-be-sent data to a peer electronic device by using the first process, wherein the first to-be-sent data is the first extended data object, or the first to-be-sent data is a copied data ClipData object corresponding to the first selected data.

20. A data copying method, applied to a system comprising a first electronic device and a second electronic device, wherein a communication connection is established between the first electronic device and the second electronic device, and the method comprises:
determining, by the first electronic device in response to receiving a first operation performed by a user, first selected data by using a first source application, and sending the first selected data to a first process, wherein the first operation is copying, cutting, or dragging, the first selected data comprises at least one of a picture, a text paragraph, and a file, and the first source application and the first process are on the first electronic device;
sending, by the first electronic device, the first selected data to the second electronic device by using the first process; and
displaying, by the second electronic device, a second window in response to receiving a second operation performed by the user, wherein the second window comprises a plurality of controls, the plurality of controls correspond to a plurality of pieces of data in the first selected data, and the plurality of controls correspond to different data.

21. The method according to claim 20, wherein the determining, by the first electronic device, first selected data by using a first source application, and sending the first selected data to a first process specifically comprises:
determining, by the first electronic device, the first selected data by using the first source application, and sending, to the first process, a first copied data ClipData object corresponding to the first selected data.

22. The method according to claim 21, wherein the method further comprises:
converting, by the first electronic device, the first copied data ClipData object into a first extended data object by using the first process, wherein the first extended data object comprises the first selected data and a first status parameter, and the first status parameter is used to describe at least a format of data in the first selected data.

23. The method according to claim 22, wherein the sending, by the first process, the first selected data to the second electronic device specifically comprises:
sending, by the first electronic device, the first extended data object to a second process by using the first process and based on the communication connection, wherein the second process is a process on the second electronic device; or sending, by the first electronic device, the first copied data ClipData object to a target application by using the first process and based on the communication connection, wherein the target application is an application on the second electronic device.

24. The method according to claim 22, wherein the method further comprises:
in response to receiving a third operation performed by the user on the plurality of controls, sending, by the second electronic device by using a second process, the data corresponding to the plurality of controls to a target application, wherein the fifth operation is a drag operation; or in response to a fourth operation performed by the user on the plurality of controls and a fifth operation performed by the user on an interface of a target application, sending, by the second electronic device by using a second process, the data corresponding to the plurality of controls to the target application, wherein the fourth operation is an operation used to select the plurality of controls, and the fifth operation is a paste operation.

25. An electronic device, wherein the electronic device comprises: one or more processors and a memory, wherein
the memory is coupled to the one or more processors, the memory is configured to store computer program code, the computer program code comprises computer instructions, and the one or more processors invoke the computer instructions, so that the electronic device performs the method according to any one of claims 1 to 19.

26. A chip system, wherein the chip system is used in an electronic device, the chip system comprises one or more processors, and the processor is configured to invoke computer instructions, so that the electronic device performs the method according to any one of claims 1 to 19.

27. A computer-readable storage medium, comprising instructions, wherein when the instructions are run on an electronic device, the electronic device is enabled to perform the method according to any one of claims 1 to 19.

28. A computer program product comprising instructions, wherein when the computer program product runs on an electronic device, the electronic device is enabled to perform the method according to any one of claims 1 to 19.
